# EUROPEAN PATENT SPECIFICATION

(11) **EP 3 764 696 B1**
(45) Date of publication and mention of the grant of the patent: **18.01.2023**
(21) Application number: 19784294.1
(22) Date of filing: 20.03.2019
(51) Int. Cl.: H04W 40/02, H04W 72/12, H04W 4/40

(54) **METHOD AND APPARATUS FOR TRANSMITTING DATA**
VERFAHREN UND VORRICHTUNG ZUR ÜBERTRAGUNG VON DATEN
PROCÉDÉ ET APPAREIL DE TRANSMISSION DE DONNÉES

(30) Priority: 09.04.2018 CN 201810313053
(43) Date of publication of application: 13.01.2021
(73) Proprietor: Huawei Technologies Co., Ltd., Longgang Shenzhen, Guangdong 518129 (CN)
(72) Inventor: YANG, Yanmei, Shenzhen, Guangdong 518129 (CN); GE, Cuili, Shenzhen, Guangdong 518129 (CN); YING, Jiangwei, Shenzhen, Guangdong 518129 (CN)
(74) Representative: Gill Jennings & Every LLP
(86) International application number: PCT/CN2019/078815
(87) International publication number: WO 2019/196608

(56) References cited:
- CN-A- 106 792 788
- CN-A- 107 018 542
- CN-A- 107 743 307
- INTEL ET AL: "Supporting 3GPP PS Data Off in 5GS", 3GPP DRAFT; S2-182073_R15_CR23502_3GPP_PS_DATA_OFF V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Montreal, Canada; 20180226 - 20180302 20 February 2018 (2018-02-20), XP051408605, Retrieved from the Internet: URL:http://www.3gpp.org/ftp/tsg%5Fsa/WG2%5 FArch/TSGS2%5F126%5FMontreal/Docs/ [retrieved on 2018-02-20]
- ETRI: "Alignment CR for Application Function influence on traffic routing procedure", 3GPP DRAFT; S2-182091_ALIGNMENT CR FOR APPLICATION FUNCTION INFLUENCE ON TRAFFIC ROUTING PROCEDURE-23502, 3RD GENERATION PARTNERSHIP PROJECT (3GPP), MOBILE COMPETENCE CENTRE ; 650, ROUTE DES LUCIOLES , vol. SA WG2, no. Montreal, Canada; 20180226 - 20180302 20 February 2018 (2018-02-20), XP051408620, Retrieved from the Internet: URL:http://www.3gpp.org/ftp/tsg%5Fsa/WG2%5 FArch/TSGS2%5F126%5FMontreal/Docs/ [retrieved on 2018-02-20]

## Description

### TECHNICAL FIELD

This application relates to the field of communications, and in particular, to a data transmission method and apparatus.

### BACKGROUND

In a wireless communications system, for example, in a 5th generation (5th-generation, 5G) mobile communications system, data of a terminal such as a vehicle to everything (vehicle to everything, V2X) message may be sent to a network side through an uplink, and then the network side sends the data to another terminal through a downlink. In the prior art, an application server is an anchor for data processing and forwarding. To be specific, the uplink for sending the data by the terminal needs to arrive at the application server (application server, AS). The application server processes (for example, parses) the data, and then the application server sends downlink data. However, some data only needs to be transmitted in a small range (for example, a range in a radius of 300 meters), and some data does not need to be processed by the server. The server can only forward the data, which increases a delay. In conclusion, how to reduce a data transmission delay in a small range is a problem that currently needs to be resolved.

INTEL ET AL, "Supporting 3GPP PS Data Off in 5GS", vol. SA WG2, no. Montreal, Canada; 20180226 - 20180302, (20180220), 3GPP DRAFT; S2-182073_R15_CR23502_3GPP_PS_DATA_OFF V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE, URL http://www.3gpp.org/ftp/tsg%5Fsa/WG2%5FArch/TSGS2%5F126%5FMontreal/Docs /, (20180220) relates to supporting 3GPP PS Data Off in 5GS.

ETRI, "Alignment CR for Application Function influence on traffic routing procedure", vol. SA WG2, no. Montreal, Canada; 20180226 - 20180302, (20180220), 3GPP DRAFT; S2-182091_ALIGNMENT CR FOR APPLICATION FUNCTION INFLUENCE ON TRAFFIC ROUTING PROCEDURE-23502, 3RD GENERATION PARTNERSHIP PROJECT (3GPP), MOBILE COMPETENCE CENTRE ; 650, ROUTE DES LUCIOLES, URL http://www.3gpp.org/ftp/tsg%5Fsa/WG2%5FArch/TSGS2%5F126%5FMontreal/Docs /, (20180220) relates to alignment CR for application function influence on traffic routing procedure.

### SUMMARY

This application provides a data transmission method and apparatus, so that a request message is sent to a user plane function (user plane function, UPF) that manages a broadcast session, the request message is used to request the UPF that manages the broadcast session to perform a local broadcast breakout on some uplink information, and the uplink information is not sent to an AS, to reduce a transmission delay of the uplink information broadcast in a small range.

The invention has been defined in the independent claims. Further specific technical features have been defined in the dependent claims.

### BRIEF DESCRIPTION OF DRAWINGS

FIG. 1 is a schematic diagram of a network architecture applicable to this application;
FIG. 2 is a schematic diagram of a data transmission method from the perspective of a terminal;
FIG. 3 is a schematic diagram of the data transmission method from the perspective of a SMF;
FIG. 4 is a schematic diagram of the data transmission method from the perspective of a first UPF;
FIG. 5 is a schematic diagram of the data transmission method from the perspective of a broadcast session management network element;
FIG. 6 is a schematic diagram of the data transmission method from the perspective of a second UPF;
FIG. 7 is a schematic diagram of still another data transmission method according to this application;
FIG. 8 is a schematic diagram of still another data transmission method according to this application;
FIG. 9 is a schematic diagram of still another data transmission method according to this application;
FIG. 10 is a schematic diagram of still another data transmission method according to this application;
FIG. 11 is a schematic diagram of still another data transmission method according to this application;
FIG. 12 is a schematic structural diagram of a possible terminal according to this application;
FIG. 13 is a schematic structural diagram of another possible terminal according to this application;
FIG. 14 is a schematic structural diagram of a possible SMF according to this application;
FIG. 15 is a schematic structural diagram of another possible SMF according to this application;
FIG. 16 is a schematic structural diagram of a possible first UPF according to this application;
FIG. 17 is a schematic structural diagram of another possible first UPF according to this application;
FIG. 18 is a schematic structural diagram of a possible broadcast session management network element according to this application;
FIG. 19 is a schematic structural diagram of another possible broadcast session management network element according to this application;
FIG. 20 is a schematic structural diagram of a possible second UPF according to this application; and
FIG. 21 is a schematic structural diagram of another possible second UPF according to this application.

### DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

The technical solutions of this application may be applied to various communications systems, such as a global system for mobile communications (global system of mobile communication, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD), universal mobile telecommunications system (universal mobile telecommunication system, UMTS), a worldwide interoperability for microwave access (worldwide interoperability for microwave access, WiMAX) communications system, and a 5G system.

The terminal in this application may be referred to as user equipment, an access terminal, a subscriber unit, a subscriber station, a mobile station, a mobile station, a remote station, a remote terminal, a mobile device, a user terminal, a wireless communications device, a user agent, a user apparatus, or the like. The terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal in a 5G network, a terminal in a future evolved public land mobile network (public land mobile network, PLMN), or the like. This is not limited in this application.

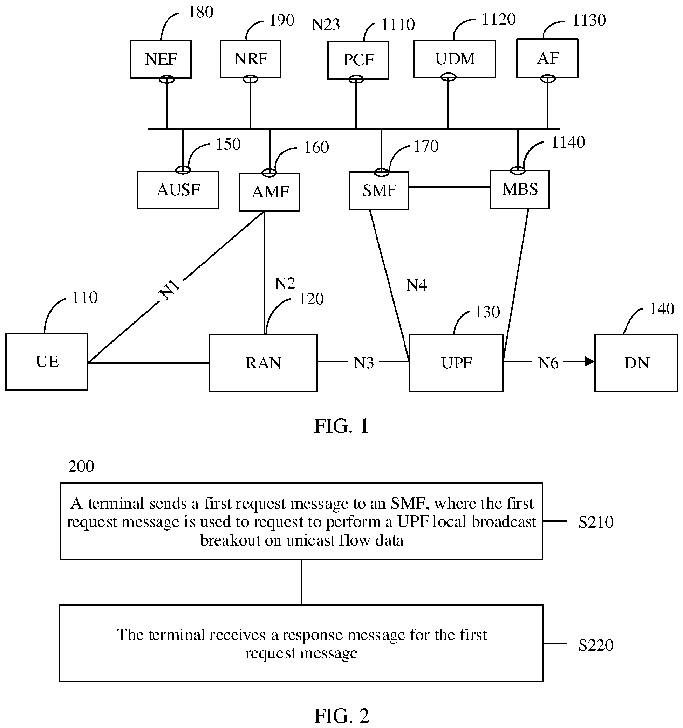

FIG. 1 shows a network architecture applied to this application. As shown in FIG. 1, the network architecture is a network architecture described from a perspective of a service interface, and network elements in the network architecture are separately described in brief below.
1. A (radio) access network (radio access network, (R)AN) is used to provide a network access function for an authorized user in a specific area, and can use transmission tunnels with different quality based on user levels, service requirements, and the like. A (R)AN network element can manage radio resources and provide an access service for a terminal, to forward a control signal and user data between the terminal and a core network. The (R)AN network element may further be understood as a base station in a conventional network.
2. A user plane function (user plane function, UPF) is used for packet routing and forwarding, QoS processing of user plane data, and the like.
3. A data network (data network, DN) network element is configured to provide a network for data transmission, for example, the Internet (Internet).
4. An authentication server function (authentication server function, AUSF) is mainly used for user authentication and the like.
5. An access management function (access and mobility management function, AMF) is mainly used for mobility management, access management, and the like, and may be used to implement functions other than session management in mobility management entity (mobility management entity, MME) functions, for example, functions such as lawful interception and access authorization/authentication.
6. A session management function (session management function, SMF) is mainly used for session management, network interconnection protocol (internet protocol, IP) address allocation and management of a terminal, selection of a manageable user plane function, a termination point of a policy control and charging function interface, downlink data notification, and the like.
7. A network exposure function (network exposure function, NEF) is used to securely open, to the outside, a service, a capability, and the like that are provided by a 3GPP network function.
8. A network repository function (network repository function, NRF) is used to store description information of a network function entity and a service provided by the network function entity, and support service discovery, network element entity discovery, and the like.
9. A policy control function (policy control function, PCF) is a unified policy framework used for instructing network behavior, and provides policy rule information and the like for control plane function network elements (such as the AMF and the SMF).
10. Unified data management (unified data management, UDM) is used to process a user identifier, access authentication, registration, mobility management, and the like.
11. An application function (application function, AF) is used to perform data routing affected by an application, access a network exposure function network element, or interact with a policy framework to perform policy control, or the like.
13. User equipment (user equipment, UE) may include various handheld devices, vehicle-mounted devices, wearable devices, computing devices, or other processing devices connected to a wireless modem that have a wireless communication function, and terminals, mobile stations (mobile station, MS), terminals (terminal), and soft terminals in various forms, such as vehicle-mounted communications devices and sensors.

In the network architecture, an N2 interface is a reference point between a (R)AN 120 and an AMF 160, and is used to send a non-access stratum (non-access stratum, NAS) message and the like; an N3 interface is a reference point between the (R)AN 120 and a UPF 130, and is used to transmit user plane data and the like; an N4 interface is a reference point between an SMF 170 and the UPF 130, and is used to transmit information such as tunnel identifier information of an N3 connection, data buffer indication information, and a downlink data notification message; and an N6 interface is a reference point between the UPF 130 and a DN 140, and is used to transmit user plane data and the like.

It should be understood that the foregoing network architecture applied to implementations of this application is merely an example of a network architecture described from a perspective of a service architecture, and the network architecture applicable to the implementations of this application is not limited thereto. Any network architecture that can implement functions of the foregoing network elements is applicable to the implementations of this application.

For example, in some network architectures, network function entities such as the AMF 160, the SMF 170, a PCF 1110, and a UDM 1120 are all referred to as network functions (network function, NF). Alternatively, in some other network architectures, a set of network elements such as the AMF 160, the SMF 170, the PCF 1110, and the UDM 1120 may be referred to as a control plane function (control plane function, CPF).

For ease of description, the foregoing network architecture is used as an example to describe in detail the implementations of this application.

The following describes a data transmission method according to the implementations of this application with reference to FIG. 2 to FIG. 6.

FIG. 2 is a schematic diagram of a data transmission method from the perspective of the a terminal. The method 200 includes the following steps.

S210. A terminal sends a first request message to an SMF, where the first request message is used to request to perform a UPF local broadcast breakout on unicast flow data.

For example, the terminal may send the first request message to the SMF by using a RAN and an AMF, to request to perform the UPF local broadcast breakout on the unicast flow data.

The first request message may be a dedicated message, for example, a V2X transport channel request (V2X transport channel request).

In addition, the first request message may alternatively be another reused message, for example, a packet data unit (packet data unit, PDU) session modification request (PDU session modification request). The terminal may reuse another message explicitly or implicitly. For example, the terminal may add indication information or information in a special format to the PDU session modification request. Correspondingly, when receiving the PDU session modification request that includes the indication information or the information in the special format, a core network element may determine that the terminal requests to perform the UPF local broadcast breakout on the unicast flow data.

The unicast flow data may be data transmitted over a unicast flow (data over unicast flow), or may be data transmitted over a QoS flow. This is not limited.

In this application, unless otherwise specified, "bear (bear)" and "flow (flow)" may be used interchangeably.

The "UPF local broadcast breakout" refers to that after uplink unicast flow data of data transmission arrives at the UPF, the data is not transmitted outside a communications network. Instead, the UPF is used as an anchor for uplink and downlink data forwarding, and the data is sent to another UE by using a downlink broadcast transmission path corresponding to the UPF. The UPF that receives the unicast flow data in the uplink and a UPF that sends the flow data in a broadcast manner may be different UPFs.

S220. The terminal receives a response message for the first request message.

In the method provided in the foregoing implementation, the terminal sends the first request message to the SMF, to request to perform the UPF local broadcast breakout on the unicast flow data, so that the UPF (where the UPF is a UPF corresponding to a unicast session) that receives the unicast flow data sent by the terminal does not forward the received unicast flow data to an AS, but instead, forwards the received unicast flow data to a UPF corresponding to a broadcast session for performing a broadcast breakout locally (that is, on the UPF corresponding to the broadcast session, where the UPF may further be a UPF corresponding to a broadcast transmission path used for a UPF broadcast breakout), to reduce a length of a transmission path for the unicast flow data, thereby reducing a transmission delay of the unicast flow data that needs to be broadcast in a small transmission range (for example, a transmission range corresponding to one PLMN or a range corresponding to one UPF).

The response message is used to indicate that the first request message is already accepted.

The response message for the first request message may be an ACK or a NACK. For example, when the response message for the first request message is an ACK, the response message for the first request message is used to indicate that the first request message is already accepted, or the response message for the first request message is used to indicate that requested content of the first request message is already accepted, and the terminal may send the unicast flow data when receiving the ACK, thereby avoiding a case in which a broadcast breakout failure of the unicast flow data is caused because the core network element is not ready to perform a UPF broadcast breakout.

Optionally, the first request message includes unicast flow information, and the unicast flow information is used to identify an uplink transmission path for the unicast flow data.

The unicast flow information may include at least one of a session identifier (for example, a PDU session ID), a flow identifier (for example, a QoS flow identifier (QoS flow ID, QFI) or a 5G quality of service identifier (5G QoS identifier, 5QI)), and a unicast UPF tunnel identifier of the terminal.

For example, when the unicast flow information includes a flow identifier, the unicast flow information may be used to indicate that data of a flow corresponding to the flow identifier needs to be switched to downlink broadcast transmission; when the unicast flow information includes only a session identifier, the unicast flow information may be used to indicate that data of all flows in a session corresponding to the session identifier needs to be switched to downlink broadcast transmission; or when the unicast flow information includes a UPF tunnel identifier, the unicast flow information may be used to indicate that data corresponding to the UPF tunnel identifier needs to be switched to downlink broadcast transmission.

Correspondingly, a core network may identify the unicast flow data based on the unicast flow information.

Optionally, the first request message further includes at least one of broadcast flow information, MBS information, communications area information, and local broadcast breakout indication information.

The broadcast flow information may be used to indicate a transmission path for the UPF local broadcast breakout. For example, the broadcast flow information is a multimedia broadcast/multicast service SMF (multimedia broadcast/multicast service SMF, MBS) session identifier (MBS Session ID) and/or an MBS bearer identifier (MBS Bearer ID), where the MBS session identifier may also be referred to as a broadcast session identifier, the MBS bearer identifier may also be referred to as a broadcast bearer identifier, a broadcast path identifier, or a broadcast flow identifier. The broadcast flow identifier corresponds to a temporary mobile group identity (temporary mobile subscriber identity, TMGI) in a 4G communications system, or the broadcast flow identifier corresponds to a TMGI and a flow identifier (flow ID) in a 4G communications system. The broadcast flow identifier is used to identify a group of users who receive a same service, where these users are usually located in a network area corresponding to the service, such as a cell (Cell), a multimedia broadcast multicast service single frequency network (multimedia broadcast multicast service single frequency network, MBSFN), and a broadcast service area. Therefore, the broadcast flow identifier may further be understood as being used to identify a network transmission area (or a transmission path) of service data.

The communications area information may be used to indicate a communications area in which the UPF local broadcast breakout is performed, and may also be referred to as broadcast area description information. The communications area information may be information such as a service area identity (service area identity, SAI), an E-UTRAN cell global identifier (E-UTRAN cell global identifier, ECGI) or a cell identity list (cell ID list), a registration area (registration area, RA), a tracing area (tracing area, TA), a local network service area (local area data network service area), or a geographical area (for example, longitude and latitude information), or may be a circular area that uses a current location of the terminal as a center and that has a specified radius. E-UTRAN is short for an evolved UMTS terrestrial radio access network (evolved UMTS terrestrial radio access network).

The local broadcast breakout indication information may be used to indicate to perform the UPF local broadcast breakout on the unicast flow data. The indication information may be represented by using one bit. In an implementation, the indication information is used to indicate, to the SMF, that uplink data of the terminal does not need to be sent to a V2X server, but is sent to a corresponding downlink broadcast transmission path for transmission. In another implementation, the indication information may alternatively be used to indicate the SMF to send uplink data of the terminal to a V2X server, and additionally copy the uplink data of the terminal to a corresponding downlink broadcast transmission path for transmission.

For example, when the first request message includes the broadcast flow information and/or the communications area information, a core network element (which may be the SMF and a broadcast session management network element) may determine a transmission path for the UPF local broadcast breakout based on the broadcast flow information and/or the communications area information, without a need of calculating a transmission path for the UPF local broadcast breakout by using another method. This reduces load of the core network.

In addition, the local broadcast breakout indication information may explicitly indicate to perform the UPF local broadcast breakout on the unicast flow data, thereby further improving reliability of the local broadcast breakout.

Optionally, the first request message further includes an identifier of the broadcast session management network element. The identifier of the broadcast session management network element may be a name, an FQDN, a URL, a URI, an IP address, a port number, or the like of the broadcast session management network element.

Correspondingly, the SMF may find the broadcast session management network element based on the identifier of the broadcast session management network element, to exchange a signaling message.

The broadcast session management network element may be a network element that manages a broadcast session used for the UPF local broadcast breakout. The broadcast session management network element may be an SMF having a broadcast session management function, or may be an independent network element, for example, an MBS.

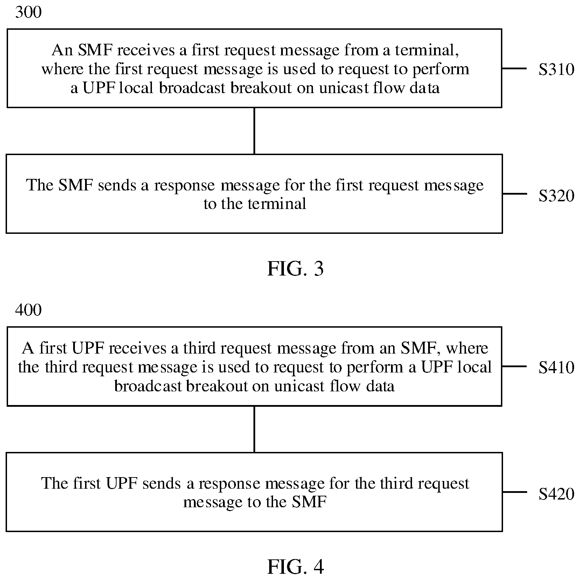

FIG. 3 is a schematic diagram of the data transmission method from the perspective of the SMF. The method 300 includes the following steps.

S310. An SMF receives a first request message from a terminal, where the first request message is used to request to perform a UPF local broadcast breakout on unicast flow data.

The first request message in the method 300 is the same as the first request message in the method 200, and details are not described herein again.

In an example, assuming that the first request message carries broadcast flow information or MBS information, the SMF sends content included in the first request message to an MBS corresponding to the broadcast flow information or the MBS information.

The MBS information may be an MBS identifier (for example, a name, a number, or a fully qualified domain name (Fully Qualified Domain Name, FQDN) of the MBS) or an MBS address (for example, a uniform resource identifier (Uniform Resource Identifier, URI), a uniform resource locator (Uniform Resource Locator, URL), an IPv4/IPv6 address, a port number, or a media access control address (Media Access Control Address, MAC)).

In another example, if the first request message does not include an MBS session identifier, a broadcast bearer identifier, or MBS information, the SMF selects one MBS according to a preset rule, and sends the request message to the selected MBS. After receiving the request message, the MBS may determine, based on communications area information carried in the first request message, to set up a new broadcast bearer, or update a broadcast bearer based on the communications area information and the MBS session identifier or the broadcast bearer identifier. Finally, the SMF sends the set-up new broadcast bearer or the updated broadcast bearer to the terminal.

In still another example, the SMF may further receive another message (for example, a terminal-requested broadcast bearer message), obtain communications area information, an MBS session identifier, a broadcast bearer identifier, or MBS information from the message, and establish or update a broadcast bearer.

The SMF may select an MBS according to the following preset rule: selecting an MBS closest to the terminal based on a location of the terminal, selecting an MBS having lightest load based on load of the MBS, or selecting an MBS based on the communications area information carried in the first request message, for example, selecting an MBS that is located in a communications area corresponding to the communications area information and that is close to a central location of the communications area.

S320. The SMF sends a response message for the first request message to the terminal.

In the method provided in the foregoing implementation, the SMF receives the first request message from the terminal, and sends the response message for the first request message to the terminal, so that a UPF corresponding to a unicast session of the terminal does not forward the received unicast flow data of the terminal to an AS, but instead, forwards the received unicast flow data to a UPF corresponding to a broadcast session for performing a broadcast breakout locally (that is, on the UPF corresponding to the broadcast session, where the UPF may further be a UPF corresponding to a broadcast transmission path used for a UPF broadcast breakout), to reduce a length of a transmission path for the unicast flow data, thereby reducing a transmission delay of the unicast flow data.

The response message is used to indicate that the first request message is already accepted. For details, refer to a related description in the implementation shown in FIG. 2. Details are not described again.

Optionally, in a first implementation scenario of the foregoing method, the method 300 further includes the following steps.

S330. The SMF determines a broadcast session management network element.

This step (S330) is an optional step. The broadcast session management network element may be a network element that manages a broadcast session used for the UPF broadcast breakout.

S340. The SMF sends a second request message to the broadcast session management network element based on the first request message, where the second request message is used to obtain information about the UPF that performs the UPF local broadcast breakout.

The information about the UPF that performs the UPF local broadcast breakout may be used to indicate the UPF that performs the UPF local broadcast breakout, and may be an identifier, for example, an address or a name, of the UPF that performs the UPF local broadcast breakout.

S350. The SMF receives a response message for the second request message, where the response message for the second request message includes the information for identifying the UPF that performs the UPF local broadcast breakout.

The second request message may be a V2X transport channel request (V2V transport channel request).

For example, after receiving the first request message, the SMF sends the second request message to the broadcast session management network element, to obtain the information about the UPF that performs the UPF local broadcast breakout. The information about the UPF is, for example, the identifier of the UPF, and the identifier of the UPF may be the address of the UPF or the name of the UPF.

Optionally, step S330 may be implemented in the following two manners:

Manner 1: The SMF determines the broadcast session management network element based on an identifier of the broadcast session management network element when the first request message includes the identifier of the broadcast session management network element.

Manner 2: The SMF determines the broadcast session management network element according to a preset rule when the first request message does not include the identifier of the broadcast session management network element.

The preset rule may be selecting a broadcast session management network element closest to the terminal, selecting a broadcast session management network element having smallest load, or selecting a broadcast session management network element located at a central location of a communications area indicated by the terminal. Therefore, the broadcast session management network element can be flexibly selected according to the technical solution provided in this implementation.

Optionally, the second request message includes unicast flow information. For details, refer to a related description in the implementation shown in FIG. 2. Details are not described again.

Correspondingly, the broadcast session management network element may establish a new broadcast session based on the unicast flow information, establish a broadcast transmission path used for the UPF local broadcast breakout, and obtain the information about the UPF that performs the local broadcast breakout. For a description of the unicast flow information, refer to the related description in the method 200.

Optionally, the second request message further includes at least one of broadcast flow information, communications area information, and local broadcast breakout indication information. The broadcast flow information is used to indicate a broadcast transmission path for the UPF local broadcast breakout, the communications area information is used to indicate a communications area for the UPF local broadcast breakout, and the local broadcast breakout indication information is used to indicate to perform the UPF local broadcast breakout on the unicast flow data. For a description of the foregoing information, refer to the description of corresponding information in the method 200.

When the second request message includes the broadcast flow information and the communications area information, the broadcast session management network element may determine the transmission path and the communications area for the UPF local broadcast breakout based on the broadcast flow information and the communications area information, without a need of calculating the transmission path and the communications area for the UPF local broadcast breakout based on another method, thereby reducing load of the broadcast session management network element. In addition, the local broadcast breakout indication information explicitly indicates to perform the UPF local broadcast breakout on the unicast flow data, thereby further improving reliability of the UPF local broadcast breakout.

Further, optionally, the method 300 further includes the following steps.

S360. The SMF sends a third request message to a first UPF, where the third request message is used to request to perform a UPF local broadcast breakout on the unicast flow data.

The first UPF is a UPF corresponding to a unicast session. In addition, the third request message may be an uplink-to-downlink connection request (UL-DL link request), or may be an N4 session modification request (N4 session modification request). This is not limited.

S370. The SMF receives a response message that is for the third request message and that is from the first UPF.

The SMF sends the third request message to the UPF corresponding to the unicast session, so that a network side performs a UPF local broadcast breakout on the unicast flow data. To be specific, the UPF corresponding to the unicast session sends the received unicast flow data of the terminal to a second UPF, and the second UPF performs the local broadcast breakout on the received data, where the second UPF is a UPF that performs the UPF local broadcast breakout. Therefore, the UPF local broadcast breakout can be implemented.

Optionally, the third request message includes information about the UPF that performs the UPF local broadcast breakout and the unicast flow information. For a description of the information about the UPF that performs the UPF local broadcast breakout and the unicast flow information, refer to the related description in the method 200. Details are not described herein again.

In an implementation, the information about the UPF that performs the local broadcast breakout and the unicast flow information that are included in the third request message may be used by the first UPF to encapsulate the unicast flow data after the first UPF receives the unicast flow data and send the encapsulated unicast flow data to the second UPF (that is, the UPF that performs the UPF local broadcast breakout). In still another implementation, the information about the UPF that performs the local broadcast breakout and the unicast flow information that are included in the third request message may be used by the first UPF to directly forward the unicast flow data to the second UPF after the first UPF receives the unicast flow data.

FIG. 4 is a schematic diagram of the data transmission method from the perspective of the first UPF. The method 400 includes the following steps.

S410. A first UPF receives a third request message from an SMF, where the third request message is used to request to perform a UPF local broadcast breakout on unicast flow data.

The third request message in the method 400 is the same as the third request message in the method 300, and details are not described again.

S420. The first UPF sends a response message for the third request message to the SMF.

The first UPF may be a UPF that manages a unicast session, that is, a UPF that receives unicast flow data of UE. After receiving the third request message, the first UPF determines, based on an indication of the third request message, that a UPF local broadcast breakout is to be performed on the unicast flow data. When subsequently receiving the unicast flow data, the first UPF performs a UPF local breakout procedure, that is, sends the received data to a second UPF (that is, the UPF that performs the UPF local broadcast breakout), and the second UPF may send the unicast flow data to another UE through a broadcast path. Therefore, the UPF local broadcast breakout is implemented.

Optionally, in an implementation scenario of the foregoing implementation, the third request message includes information about the UPF that performs the local broadcast breakout and unicast flow information, and the unicast flow information is used to identify unicast flow data.

In an implementation, the information about the UPF that performs the UPF local broadcast breakout and the unicast flow information that are included in the third request message may be used by the first UPF to encapsulate the unicast flow data after the first UPF receives the unicast flow data and send the encapsulated unicast flow data to the UPF that performs the UPF local broadcast breakout (which may be referred to as the second UPF). In an implementation, the information about the UPF that performs the UPF local broadcast breakout and the unicast flow information that are included in the third request message may be used by the first UPF to directly forward the unicast flow data to the second UPF after the first UPF receives the unicast flow data.

Further, the method 400 further includes the following steps.

S430. The first UPF receives the unicast flow data.

S440. The first UPF sends the unicast flow data to the second UPF based on the information that is about the UPF that performs the UPF local broadcast breakout and that is in the third request message.

For the information about the UPF that performs the UPF local broadcast breakout, refer to the related description in the foregoing implementation. In addition, the second UPF is a UPF corresponding to the information about the UPF that performs the UPF local broadcast breakout, that is, the UPF that performs UPF local broadcast breakout.

For example, after receiving the unicast flow data, the first UPF encapsulates the unicast flow data and sends the encapsulated unicast flow data to the second UPF, or after receiving the unicast flow data, the first UPF directly forwards the unicast flow data to the second UPF. Therefore, the UPF local broadcast breakout can be performed on to-be-processed information, and the to-be-processed information does not need to be processed by an AS.

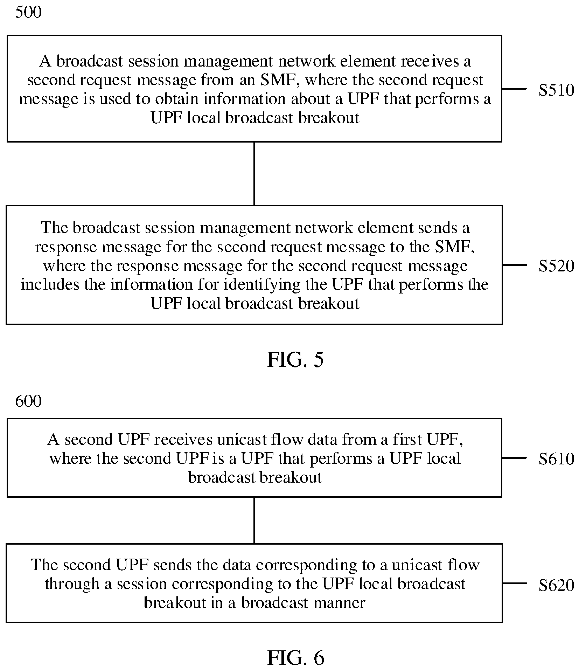

FIG. 5 is a schematic diagram of the data transmission method from the perspective of a broadcast session management network element according to this application. The method 500 includes the following steps.

S510. A broadcast session management network element receives a second request message from an SMF, where the second request message is used to obtain information about a UPF that performs a UPF local broadcast breakout.

S520. The broadcast session management network element sends a response message for the second request message to the SMF, where the response message for the second request message includes the information about the UPF that performs the UPF local broadcast breakout.

The broadcast session management network element may be an SMF corresponding to a broadcast session for the UPF local broadcast breakout, or may be an independent network element, for example, an MBS.

For the information about the UPF that performs the UPF local broadcast breakout, refer to related the description in the foregoing implementation. Details are not described again.

In the method provided in the foregoing implementation, the broadcast session management network element receives the second request message from the SMF, and sends, based on the second request message, the information about the UPF that performs the UPF local broadcast breakout to the SMF, so that the SMF sends the information about the UPF that performs the UPF local broadcast breakout to a unicast UPF, to implement the UPF local broadcast breakout. The information about the UPF that performs the UPF local broadcast breakout may be information that is about the UPF that performs the UPF local broadcast breakout and that is obtained in a process of establishing or updating a broadcast session, and the information about the UPF that performs the UPF local broadcast breakout is, for example, an identifier of the UPF, where the identifier of the UPF may be an address of the UPF or a name of the UPF.

Optionally, the second request message includes unicast flow information, and the unicast flow information is used to identify unicast flow data.

Optionally, the second request message further includes at least one of broadcast flow information, communications area information, and local broadcast breakout indication information. The broadcast flow information is used to indicate a transmission path for the UPF local broadcast breakout, the communications area information is used to indicate a communications area for the UPF local broadcast breakout, and the local broadcast breakout indication information is used to indicate to perform the UPF local broadcast breakout on the unicast flow data.

Optionally, the method further includes: determining, by the broadcast session management network element, the transmission path and the communications area for the UPF local broadcast breakout based on the broadcast flow information and the communications area information when the second request message includes the broadcast flow information and the communications area information.

The broadcast flow information indicates the transmission path, and the communications area information indicates the communications area. The broadcast session management network element may determine the transmission path for the UPF local broadcast breakout based on the broadcast flow information, and determine the communications area for the UPF local broadcast breakout based on the communications area information, without a need of calculating the transmission path and the communications area for the UPF local broadcast breakout based on another method, thereby reducing load of the broadcast session management network element. In addition, the local broadcast breakout indication information explicitly indicates to perform the UPF local broadcast breakout on the unicast flow data, thereby further improving reliability of the UPF local broadcast breakout.

Optionally, the method 500 further includes the following step:

S530. The broadcast session management network element performs an operation of establishing or updating a broadcast session based on the second request message, where the broadcast session is a session corresponding to the UPF local broadcast breakout.

Optionally, S530 includes:
establishing, by the broadcast session management network element, a new broadcast session based on the broadcast flow information, or updating a broadcast session identified by the broadcast flow information based on the broadcast flow information; or
establishing, by the broadcast session management network element, a new broadcast session based on the communications area information, or updating a broadcast session identified by the broadcast flow information based on the communications area information, where a communications area of the broadcast session is an area indicated by the communications area information; or
establishing, by the broadcast session management network element, a new broadcast session based on the local broadcast breakout indication information, or updating a broadcast session identified by the broadcast flow information based on the local broadcast breakout indication information.

In the foregoing solution, the new broadcast session can be flexibly established or the broadcast session identified by the broadcast flow information can be flexibly updated, to change a communications area.

FIG. 6 is a schematic diagram of the data transmission method from the perspective of a second UPF. The method 600 includes the following steps.

S610. A second UPF receives unicast flow data from a first UPF, where the second UPF is a UPF that performs a UPF local broadcast breakout.

S620. The second UPF broadcasts the data corresponding to a unicast flow through a broadcast transmission path corresponding to the UPF local broadcast breakout.

According to the method provided in the foregoing implementation, after determining that the UPF local broadcast breakout is to be performed, the first UPF sends the unicast flow data to the second UPF, but does not send the unicast flow data to a V2X server, where the second UPF is a UPF that performs the UPF local broadcast breakout. Therefore, the UPF local broadcast breakout can be implemented.

Optionally, the method 600 further includes the following steps.

S630. The second UPF receives a broadcast session establishment message or a broadcast session update message, where the broadcast session establishment message is used to request to establish the broadcast transmission path corresponding to the UPF local broadcast breakout, and the broadcast session update message is used to request to update the broadcast transmission path corresponding to the UPF local broadcast breakout.

S640. Establish or update, based on the broadcast session establishment message or the broadcast session update message, the broadcast transmission path corresponding to the UPF local broadcast breakout.

S641. Update, based on the broadcast session update message, the broadcast transmission path corresponding to the UPF local broadcast breakout.

The following describes in detail the data transmission method provided in this application from a perspective of message exchange. It should be noted that all the following implementations use a V2X application scenario as an example to describe the technical solutions provided in this application. However, an application scenario of the technical solutions provided in this application is not limited thereto.

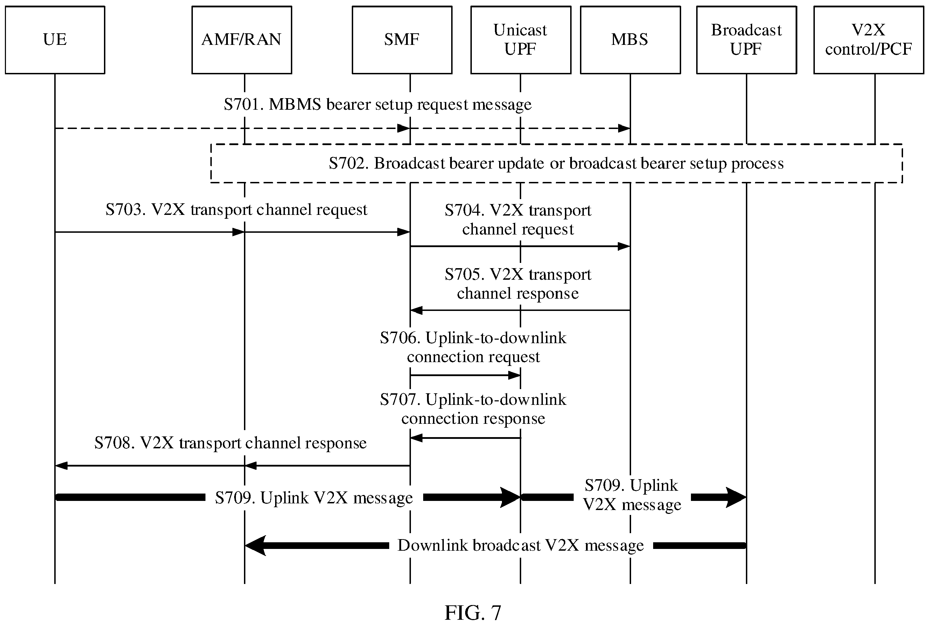

FIG. 7 is a schematic flowchart of a data transmission method according to this application.

In the method 700, UE is merely an example of a terminal that communicates with an AMF or a RAN, and the terminal that communicates with the AMF or the RAN may alternatively be a vehicle-mounted communications device. The method 700 includes the following steps.

S701. The UE determines, based on a current V2X service feature (for example, a type of a V2X message or a type of a V2X application), to change a transmission range. The UE sends an MBMS bearer setup request message (where the request message may also be referred to as a UE requested MBMS bearer (UE requested MBMS bearer)) to an SMF MBMS is an abbreviation of a multimedia broadcast/multicast service (multimedia broadcast/multicast service), and the message includes communications area information. The communications area information is used to indicate a communications range, and may also be referred to as broadcast area description information. The communications area information may be information such as a service area identity (service area identity, SAI), an E-UTRAN cell global identifier (E-UTRAN cell global identifier, ECGI) or a cell identity list (cell ID list), a registration area (registration area, RA), a tracing area (tracing area, TA), a local network service area (local area data network service area), or a geographical area (for example, longitude and latitude information), or may be a circular area that uses a current location of the UE as a center and that has a specified radius. The SMF sends the message to a broadcast session network element (an MBS shown in FIG. 7). If there is an available broadcast bearer (which may also be referred to as a broadcast flow) on a UE side, the MBMS bearer setup request message may further carry an MBS session identifier (MBS session ID) or a broadcast bearer identifier (which corresponds to a temporary mobile group identity (Temporary Mobile Subscriber Identity, TMGI) in a 4G communications system, or corresponds to a temporary mobile group identity and a flow ID in a 4G communications system, may also be referred to as a broadcast flow identifier, and is used to identify a group of users who receive a same service, where these users are usually located in a network area corresponding to the service, such as a cell (Cell), an MBSFN, or a broadcast service area, and therefore the broadcast bearer identifier may also be understood as being used to identify a network transmission area (or a transmission path) of service data). Optionally, the MBMS bearer setup request message may further carry MBS information (for example, an MBS identifier (for example, a name, a number, or a fully qualified domain name (Fully Qualified Domain Name, FQDN) of the MBS) or an MBS address (a uniform resource identifier (Uniform Resource Identifier, URI), a uniform resource locator (Uniform Resource Locator, URL), an IPv4/IPv6 address, a port number, or a media access control address (Media Access Control Address, MAC)), which are used by the SMF to send a signaling message to the MBS.

S702. A network side performs a broadcast bearer update or broadcast bearer setup process. For example, if the request message in S701 carries the MBS session identifier, the broadcast bearer identifier, or the MBS information, the SMF forwards the request to an MBS corresponding to the MBS session identifier, the broadcast bearer identifier, or the MBS information. If the request message in S701 does not include the MBS session identifier, the broadcast bearer identifier, or the MBS information, the SMF selects an MBS according to a preset rule, and forwards the request message to the selected MBS. After receiving the request, the MBS determines, based on the communications area information and the MBS session identifier or the broadcast bearer identifier or the MBS information, to set up a new broadcast bearer or update a broadcast bearer, and sends the set up new broadcast bearer or the updated broadcast bearer to the UE.

The SMF may select an MBS according to the following preset rule: selecting, based on a UE location, an MBS that is relatively close to a current location of the UE, selecting, based on MBS load, an MBS having lightest load; or selecting, based on the communications area information, an MBS located in a communications area and close to a central location. If the MBMS bearer setup request message in S701 does not include the communications area information, the SMF may select an MBS according to the first two preset rules.

S703. If the UE determines, based on a current V2X service feature (for example, a type of a V2X message or a type of a V2X application), to use an uplink-to-broadcast downlink transmission manner, the UE sends a V2X transport channel request (V2X transport channel request) to the SMF, where the V2X transport channel request (V2X transport channel request) is a first request message, and the V2X transport channel request includes unicast flow information, and may further include at least one of broadcast flow information and UPF local broadcast breakout indication information. The broadcast flow information is, for example, the MBS session identifier (MBS Session ID) and/or the MBS bearer identifier (MBS Bearer ID). The unicast flow information may include at least one of an uplink session identifier (for example, a PDU session ID), flow identifier (for example, a QoS Flow ID, QFI or a 5G QoS Identifier, 5QI), and unicast UPF tunnel identifier. If the unicast flow information includes a flow identifier, the unicast flow information is used to indicate that data of a flow corresponding to the flow identifier needs to be switched to downlink broadcast transmission. If the unicast flow information includes only a session identifier, the unicast flow information is used to indicate that data of all flows in a session corresponding to the session identifier needs to be switched to downlink broadcast transmission. If the unicast flow information includes a UPF tunnel identifier, the unicast flow information is used to indicate that data corresponding to the UPF tunnel identifier needs to be switched to downlink broadcast transmission. The UPF local broadcast breakout indication information is used to indicate to the SMF that uplink data of the UE does not need to be sent to a V2X server (namely, a V2X AS), and the uplink data of the UE is directly forwarded to a corresponding downlink broadcast path for transmission. In another optional implementation, the UPF local broadcast breakout indication information may be uses to indicate to send uplink data of the UE to a V2X server, and additionally copy the uplink data and forward the uplink data to a corresponding downlink broadcast path for transmission.

S704. The SMF sends a V2X transport channel request (V2X transport channel request) to the MBS, that is, a second request message, where the V2X transport channel request is used to request to obtain UPF information of a broadcast session. The V2X transport channel request may include the unicast flow information, and may further include at least one of the broadcast flow information and the UPF local broadcast breakout indication information.

S705. The MBS returns a V2X transport channel response (V2X transport channel response) to the SMF, where the V2X transport channel response is a response message for the second request message, and the V2X transport channel response includes broadcast UPF information (UPF (multicast) info). The broadcast UPF information is used to identify a broadcast UPF. The broadcast UPF is a UPF that performs a UPF local broadcast breakout, and may also be referred to as a second UPF. The broadcast UPF information may include at least one of the following information: a tunnel identifier of the broadcast UPF, an address of the broadcast UPF, and a broadcast user plane address and port number (used by a unicast UPF to encapsulate a data packet). The MBS obtains the broadcast UPF information in the broadcast session establishment/update process in S702.

S706. The SMF sends an uplink-to-downlink connection request (UL-DL link request) to the unicast UPF (which may also be referred to as a first UPF), where the uplink-to-downlink connection request is a third request message, the uplink-to-downlink connection request includes the broadcast UPF information and the unicast flow information, and the uplink-to-downlink connection request is used to request to perform a local breakout (Local breakout) on the uplink data to switch to broadcast downlink, that is, request to perform a UPF local broadcast breakout. If the unicast flow information in S703 is a flow identifier, the unicast flow information in S706 is the flow identifier in S703; if the unicast flow information in S703 includes only the session identifier, the unicast flow information in S706 may be identifiers of all flows corresponding to the session identifier, and in this case, the identifiers of all the flows corresponding to the session identifier may further be replaced with a core network (core network, CN) tunnel identifier corresponding to the session identifier.

After receiving the uplink-to-downlink connection request, if subsequently receiving uplink data corresponding to the UE, the unicast UPF forwards the data to the broadcast UPF. The uplink-to-downlink connection request may further include UPF local broadcast breakout indication information used to indicate to the SMF that the uplink data of the UE does not need to be sent to a V2X server (namely, a V2X AS), and the uplink-to-downlink connection request is directly forwarded to a corresponding downlink broadcast path for transmission. In another optional implementation, the UPF local broadcast breakout indication information may be used to indicate to send uplink data of the UE to a V2X server, and additionally copy the uplink data and forward the uplink data to a corresponding broadcast path for downlink transmission. In this manner, the unicast UPF not only forwards the data to the broadcast UPF, but also sends the data to the V2X server.

S707. The unicast UPF sends an uplink-to-downlink connection response (UL-DL link response), that is, a response message for the third request message, to the SMF, where the response mesaage is used to confirm that the unicast UPF accepts the request of the third request message.

S708. The SMF sends a V2X transport channel response (V2X transport channel response) to the UE, where the V2X transport channel response is a response message for the first request message, and is used to confirm that the first request message is successfully processed.

S709. The UE sends an uplink V2X message to the unicast UPF, and the unicast UPF encapsulates or forwards a data packet, and sends the uplink V2X message to the broadcast UPF. The broadcast UPF sends the V2X message to another UE through a broadcast transmission path. The encapsulation refers to that the unicast UPF sends the received uplink V2X message to the broadcast UPF by using the broadcast user plane address and port number. The forwarding refers that the unicast UPF sends the uplink V2X message to the broadcast UPF, and the broadcast UPF encapsulates the received uplink V2X message.

It should be noted that, if the SMF and the MBS are disposed in a combined manner, signaling exchange between the SMF and the MBS is implemented internally and may be omitted. If the unicast UPF and the broadcast UPF are disposed in a combined manner, S709 is internally implemented. The foregoing steps may be performed at time intervals.

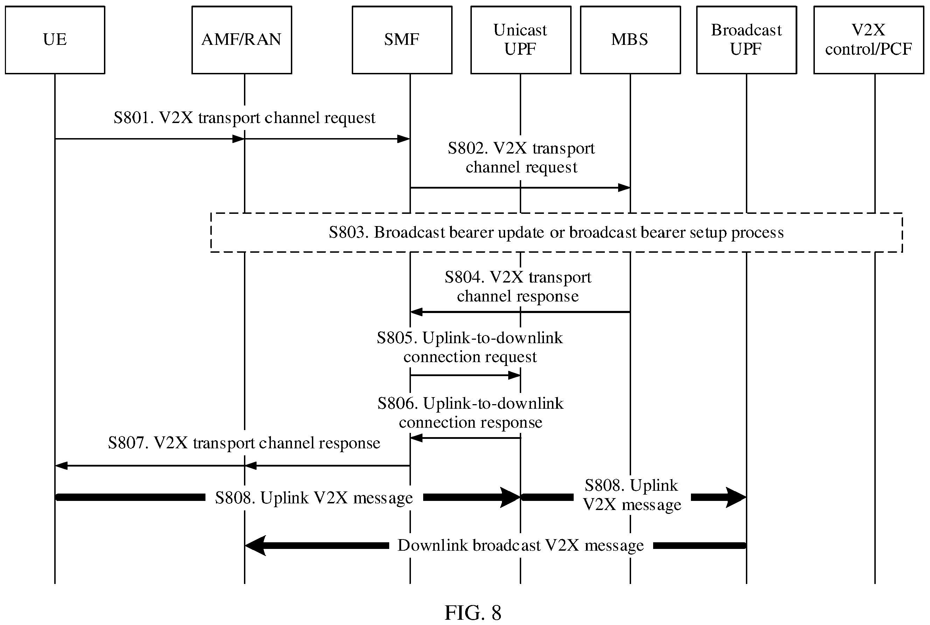

FIG 8 is a schematic flowchart of another data transmission method according to this application.

In the method 800, UE is merely an example of a terminal that communicates with an AMF or a RAN, and the terminal that communicates with the AMF or the RAN may alternatively be a vehicle-mounted communications device. The method 800 includes the following steps.

S801. The UE determines, based on a current V2X service feature (for example, a type of a V2X message or a type of a V2X application), to change a transmission range. In this case, the UE sends a V2X transport channel request (V2X transport channel request) to an SMF, where the V2X transport channel request is a first request message, and the V2X transport channel request includes unicast flow information, and may further include at least one of broadcast flow information, communications area information, and UPF local broadcast breakout indication information. The broadcast flow information is, for example, the MBS session identifier (MBS Session ID) and/or the MBS bearer identifier (MBS Bearer ID). The unicast flow information may include at least one of an uplink session identifier (for example, a PDU session ID), flow identifier (for example, a QoS Flow ID, QFI or a 5G QoS Identifier, 5QI), and unicast UPF tunnel identifier. If the unicast flow information includes a flow identifier, the unicast flow information is used to indicate that data of a flow corresponding to the flow identifier needs to be switched to downlink broadcast transmission. If the unicast flow information includes only a session identifier, the unicast flow information is used to indicate that data of all flows in a session corresponding to the session identifier needs to be switched to downlink broadcast transmission. If the unicast flow information includes a UPF tunnel identifier, the unicast flow information is used to indicate that data corresponding to the UPF tunnel identifier needs to be switched to downlink broadcast transmission. The UPF local broadcast breakout indication information is used to indicate to the SMF that uplink data of the UE does not need to be sent to a V2X server (namely, a V2X AS), and the uplink data of the UE is directly forwarded to a corresponding downlink broadcast path for transmission. In another optional implementation, the UPF local broadcast breakout indication information may be uses to indicate to send uplink data of the UE to a V2X server, and additionally copy the uplink data and forward the uplink data to a corresponding broadcast path for downlink transmission.

The foregoing communications area information is used to indicate a communications range, and may also be referred to as broadcast area description information. The communications area information may be information such as a service area identity (service area identity, SAI), an E-UTRAN cell global identifier (E-UTRAN cell global identifier, ECGI) or a cell identity list (cell ID list), a registration area (registration area, RA), a tracing area (tracing area, TA), a local network service area (local area data network service area), or a geographical area (for example, longitude and latitude information), or may be a circular area that uses a current location of the UE as a center and that has a specified radius. The SMF sends the message to a broadcast session network element (an MBS shown in FIG. 8). If there is an available broadcast bearer on a UE side, the V2X transport channel request may further carry an MBS session identifier (MBS session ID) or a broadcast bearer identifier (which corresponds to a temporary mobile group identity (Temporary Mobile Subscriber Identity, TMGI) in a 4G communications system, or corresponds to a temporary mobile group identity and a flow ID in a 4G communications system, may also be referred to as a broadcast flow identifier, and is used to identify a group of users who receive a same service, where these users are usually located in a network area corresponding to the service, such as a cell (Cell), an MBSFN, or a broadcast service area, and therefore the broadcast bearer identifier may also be understood as being used to identify a network transmission area (or a transmission path) of service data). Optionally, the MBMS bearer setup request message may further carry MBS information (for example, an MBS identifier (for example, a name, a number, or a fully qualified domain name (Fully Qualified Domain Name, FQDN) of the MBS) or an MBS address (a uniform resource identifier (Uniform Resource Identifier, URI), a uniform resource locator (Uniform Resource Locator, URL), an IPv4/IPv6 address, a port number, or a media access control address (Media Access Control Address, MAC)), which are used by the SMF to send a signaling message to the MBS.

S802. The SMF sends a V2X transport channel request (V2X transport channel request) to the MBS, that is, a second request message, where the V2X transport channel request is used to request to obtain UPF information of a broadcast session. The V2X transport channel request may include the unicast flow information, and may further include at least one of the broadcast flow information, unicast flow information, and the UPF local broadcast breakout indication information.

S803. A network side performs a broadcast bearer update or broadcast bearer setup process. For example, if the request message in S801 carries the MBS session identifier, the broadcast bearer identifier, or the MBS information, the SMF forwards the request to an MBS corresponding to the MBS session identifier, the broadcast bearer identifier, or the MBS information. If the request message in S801 does not include the MBS session identifier, the broadcast bearer identifier, or the MBS information, the SMF selects an MBS according to a preset rule, and forwards the request message to the selected MBS. After receiving the request, the MBS determines, based on the communications area information and the MBS session identifier or the broadcast bearer identifier or the MBS information, to set up a new broadcast bearer or update a broadcast bearer, and sends the set up new broadcast bearer or the updated broadcast bearer to the UE.

The SMF may select an MBS according to the following preset rule: selecting, based on a UE location, an MBS that is relatively close to a current location of the UE, selecting, based on MBS load, an MBS having lightest load; or selecting, based on the communications area information, an MBS located in a communications area and close to a central location. If the V2X transport channel request in S801 does not include the communications area information, the SMF may select an MBS according to the first two preset rules.

S804. The MBS returns a V2X transport channel response (V2X transport channel response) to the SMF, where the V2X transport channel response is a response message for the second request message, and the V2X transport channel response includes broadcast UPF information (UPF (multicast) info). The broadcast UPF information is used to identify a broadcast UPF. The broadcast UPF is a UPF that performs a UPF local broadcast breakout, and may also be referred to as a second UPF. The broadcast UPF information may include at least one of the following information: a tunnel identifier of the broadcast UPF, an address of the broadcast UPF, and a broadcast user plane address and port number (used by a unicast UPF to encapsulate a data packet). The MBS obtains the broadcast UPF information in the broadcast session establishment/update process in S803.

S805. The SMF sends an uplink-to-downlink connection request (UL-DL link request) to the unicast UPF (which may also be referred to as a first UPF), where the uplink-to-downlink connection request is a third request message, the uplink-to-downlink connection request includes the broadcast UPF information and the unicast flow information, and the uplink-to-downlink connection request is used to request to perform a local breakout (Local breakout) on the uplink data to switch to broadcast downlink, that is, request to perform a UPF local broadcast breakout. If the unicast flow information in S801 is a flow identifier, the unicast flow information in S805 is the flow identifier in S801; if the unicast flow information in S801 includes only the session identifier, the unicast flow information in S805 may be identifiers of all flows corresponding to the session identifier, and in this case, the identifiers of all the flows corresponding to the session identifier may further be replaced with a core network (core network, CN) tunnel identifier corresponding to the session identifier.

After receiving the uplink-to-downlink connection request, if subsequently receiving uplink data corresponding to the UE, the unicast UPF forwards the data to the broadcast UPF. The uplink-to-downlink connection request may further include UPF local broadcast breakout indication information used to indicate to the SMF that the uplink data of the UE does not need to be sent to a V2X server (namely, a V2X AS), and the uplink-to-downlink connection request is directly forwarded to a corresponding downlink broadcast path for transmission. In another optional implementation, the UPF local broadcast breakout indication information may be used to indicate to send uplink data of the UE to a V2X server, and additionally copy the uplink data and forward the uplink data to a corresponding broadcast path for downlink transmission. In this manner, the unicast UPF not only forwards the data to the broadcast UPF, but also sends the data to the V2X server.

S806. The unicast UPF sends an uplink-to-downlink connection response (UL-DL link response), that is, a response message for the third request message, to the SMF, where the response message is used to confirm that the unicast UPF accepts the request of the third request message.

S807. The SMF sends a V2X transport channel response (V2X transport channel response) to the UE, where the V2X transport channel response is a response message for the first request message, and is used to confirm that the first request message is successfully processed.

S808. The UE sends an uplink V2X message to the unicast UPF, and the unicast UPF encapsulates or forwards a data packet, and sends the uplink V2X message to the broadcast UPF. The broadcast UPF sends the V2X message to another UE through a broadcast transmission path. The encapsulation refers to that the unicast UPF sends the received uplink V2X message to the broadcast UPF by using the broadcast user plane address and port number. The forwarding refers that the unicast UPF sends the uplink V2X message to the broadcast UPF, and the broadcast UPF encapsulates the received uplink V2X message.

It should be noted that, if the SMF and the MBS are disposed in a combined manner, signaling exchange between the SMF and the MBS is implemented internally and may be omitted. If the unicast UPF and the broadcast UPF are disposed in a combined manner, S808 is internally implemented. The foregoing steps may be performed at time intervals.

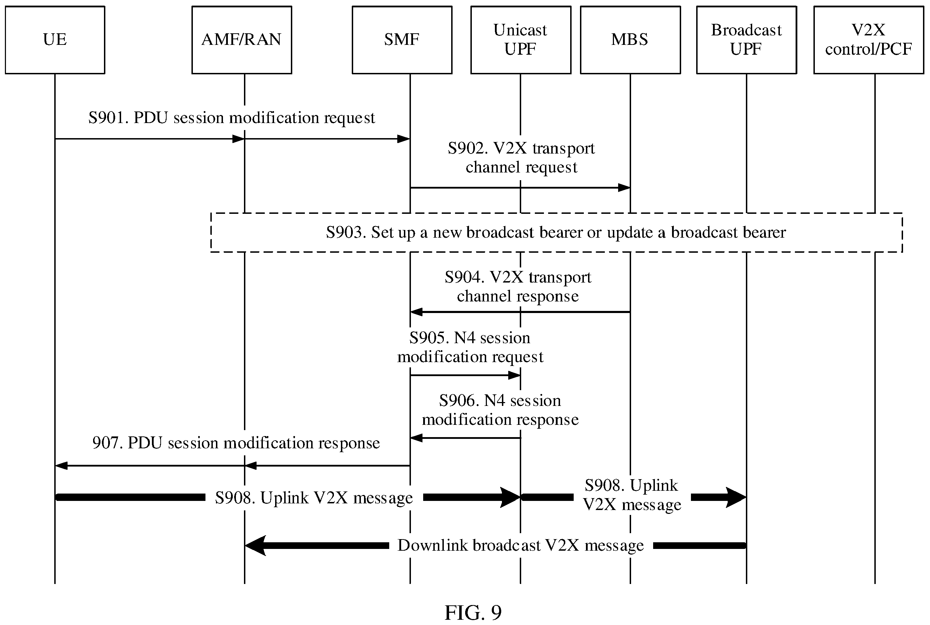

FIG. 9 is a schematic flowchart of still another data transmission method according to this application.

In the method 900, UE is merely an example of a terminal that communicates with an AMF or a RAN, and the terminal that communicates with the AMF or the RAN may alternatively be a vehicle-mounted communications device. The method 900 includes the following steps.

S901. The UE determines, based on a current V2X service feature (for example, a type of a V2X message or a type of a V2X application), to change a transmission range. The UE sends a packet data unit (packet data unit, PDU) session modification request (PDU session modification request) to an SMF, where the request is a first request message, and the request includes unicast flow information, and may further include at least one of broadcast flow information, communications area information, and UPF local broadcast breakout indication information. The broadcast flow information is, for example, the MBS session identifier (MBS Session ID) and/or the MBS bearer identifier (MBS Bearer ID). The unicast flow information may include at least one of an uplink session identifier, a flow identifier, and a unicast UPF tunnel identifier. If the unicast flow information includes a flow identifier (flow ID), the unicast flow information is used to indicate that a flow corresponding to the flow identifier needs to be switched to downlink broadcast transmission. If the unicast flow information includes only a session identifier (session ID), the unicast flow information is used to indicate that all flows in a session corresponding to the session identifier need to be switched to downlink broadcast transmission. If the unicast flow information includes a UPF tunnel identifier, the unicast flow information is used to indicate that data corresponding to the UPF tunnel identifier needs to be switched to downlink broadcast transmission. The UPF local broadcast breakout indication information is used to indicate to the SMF that uplink data of the UE does not need to be sent to a V2X server (namely, an AS), and the uplink data of the UE is directly forwarded to a corresponding downlink broadcast. In another optional implementation, the UPF local broadcast breakout indication information may be uses to indicate to send uplink data of the UE to a V2X server, and additionally copy the uplink data and forward the uplink data to a corresponding broadcast path for downlink transmission.

The foregoing communications area information is used to indicate a communications range, and may also be referred to as broadcast area description information. The communications area information may be information such as a service area identity (service area identity, SAI), an E-UTRAN cell global identifier (E-UTRAN cell global identifier, ECGI) or a cell identity list (cell ID list), a registration area (registration area, RA), a tracing area (tracing area, TA), a local network service area (local area data network service area), or a geographical area (for example, longitude and latitude information), or may be a circular area that uses a current location of the UE as a center and that has a specified radius. The SMF sends the message to a broadcast session network element (an MBS (MBMS SMF) shown in FIG. 9). If there is an available broadcast bearer (which may also be referred to as a broadcast flow) on a UE side, the V2X transport channel request may further carry an MBS session identifier (MBS session ID) or a broadcast bearer identifier (which may also be referred to as a broadcast flow identifier). Optionally, the V2X transport channel request may further carry MBS information (for example, an identifier, an address, and a name of the MBS), and the MBS information is used by the SMF to contact the MBS.

For the SMF, the SMF may determine a function of the message based on one or more of the broadcast flow information, the communications area information, and the UPF local broadcast breakout indication information, and further perform a corresponding action.

S902. The SMF sends a V2X transport channel request (that is, a second request message) to the MBS, where the V2X transport channel request is used to obtain UPF information of a broadcast session, and the UPF is a UPF of a broadcast transmission path used for a UPF local broadcast breakout. The V2X transport channel request may include the unicast flow information, and may further include at least one of the broadcast flow information, unicast flow information, and the UPF local broadcast breakout indication information. The MBS may determine a function of the V2X transport channel request based on the UPF local broadcast breakout indication information and/or a message type of the V2X transport channel request.

If the request message in S901 carries the MBS session identifier, the broadcast bearer identifier, or the MBS information, the SMF forwards the request to an MBS corresponding to the MBS session identifier, the broadcast bearer identifier, or the MBS information. If the request message in S901 does not include the MBS session identifier, the broadcast bearer identifier, or the MBS information, the SMF selects an MBS according to a preset rule, and forwards the request message to the selected MBS. After receiving the request, the MBS determines, based on the communications area information and the MBS session identifier or the broadcast bearer identifier or the MBS information, to set up a new broadcast bearer or update a broadcast bearer, and sends the set up new broadcast bearer or the updated broadcast bearer to the UE.

The SMF may select an MBS according to the following preset rule: selecting, based on a UE location, an MBS that is relatively close to a current location of the UE, selecting, based on MBS load, an MBS having lightest load; or selecting, based on the communications area information, an MBS located in a communications area and close to a central location. If the MBMS bearer setup request message in S901 does not include the communications area information, the SMF may select an MBS according to the first two preset rules.

S903. After receiving the V2X transport channel request, the MBS determines, based on the communications area information, to set up a new broadcast bearer (where the V2X transport channel request does not carry the broadcast flow information or the MBS information) or to update a broadcast bearer (where the V2X transport channel request carries the broadcast flow information or the MBS information), and sends the set up new broadcast bearer or updated broadcast bearer to the UE. In this process, the MBS sends at least one of the broadcast flow information, the unicast flow information, and the UPF local broadcast breakout indication information to the broadcast UPF. The information is used to indicate that data corresponding to the unicast flow information needs to be transmitted in a downlink manner through a path corresponding to the broadcast flow information.

S904. The MBS returns a V2X transport channel response (V2V transport channel response) to the SMF, where the V2X transport channel response is a response message for the second request message, and the V2X transport channel response includes broadcast UPF information (UPF (multicast) info). The broadcast UPF information is used to identify a broadcast UPF. The broadcast UPF is a UPF that performs a UPF local broadcast breakout, and may also be referred to as a second UPF. The broadcast UPF information may include at least one of the following information: a tunnel identifier of the broadcast UPF, an address of the broadcast UPF, and a broadcast user plane address and port number (used by a unicast UPF to encapsulate a data packet). The MBS obtains the broadcast UPF information in the broadcast session establishment/update process in S902.

S905. The SMF sends an N4 session modification request (N4 session modification request) to a unicast UPF (which may also be referred to as a first UPF), where the N4 session modification request is a third request message, and the N4 session modification request includes broadcast UPF information and unicast flow information, the N4 session modification request is used to request to perform a local breakout (Local Breakout) on the uplink data to switch to broadcast downlink, that is, request to perform a UPF local broadcast breakout. If the unicast flow information in S901 is a flow identifier, the unicast flow information in S905 is the flow identifier in S901; if the unicast flow information in S901 includes only the session identifier, the unicast flow information in S905 may be identifiers of all flows corresponding to the session identifier, and in this case, the identifiers of all the flows corresponding to the session identifier may further be replaced with a core network (core network, CN) tunnel identifier corresponding to the session identifier.

After receiving the uplink-to-downlink connection request, if subsequently receiving uplink data corresponding to the UE, the unicast UPF forwards the data to the broadcast UPF. The uplink-to-downlink connection request may further include UPF local broadcast breakout indication information used to indicate to the SMF that the uplink data of the UE does not need to be sent to a V2X server (namely, a V2X AS), and the uplink-to-downlink connection request is directly forwarded to a corresponding downlink broadcast transmission path for transmission. In another optional implementation, the UPF local broadcast breakout indication information may be used to indicate to send uplink data of the UE to a V2X server, and additionally copy the uplink data and forward the uplink data to a corresponding downlink broadcast path for transmission. In this manner, the unicast UPF not only forwards the data to the broadcast UPF, but also sends the data to the V2X server.

S906. The unicast UPF sends an N4 session modification response (N4 session modification response), namely, a response message for the third request message, to the SMF, where the response message is used to confirm that the unicast UPF accepts the request of the third request message.

S907. The SMF sends a PDU session modification response (PDU session modification response) to the UE, where the PDU session modification response is a response message for the first request message, and is used to confirm that the first request message is successfully processed.

S908. The UE sends an uplink V2X message to the unicast UPF, and the unicast UPF encapsulates or forwards a data packet, and sends the uplink V2X message to the broadcast UPF. The broadcast UPF sends the V2X message to another UE on the broadcast bearer. The encapsulation refers to that the unicast UPF sends the uplink V2X message to the broadcast UPF by using the broadcast user plane address and port number. The forwarding refers that the unicast UPF sends the uplink V2X message to the broadcast UPF, and the broadcast UPF encapsulates the uplink V2X message.

It should be noted that, if the SMF and the MBS are disposed in a combined manner, signaling exchange between the SMF and the MBS is implemented internally and may be omitted. If the unicast UPF and the broadcast UPF are disposed in a combined manner, S908 is internally implemented. The foregoing steps may be performed at time intervals.

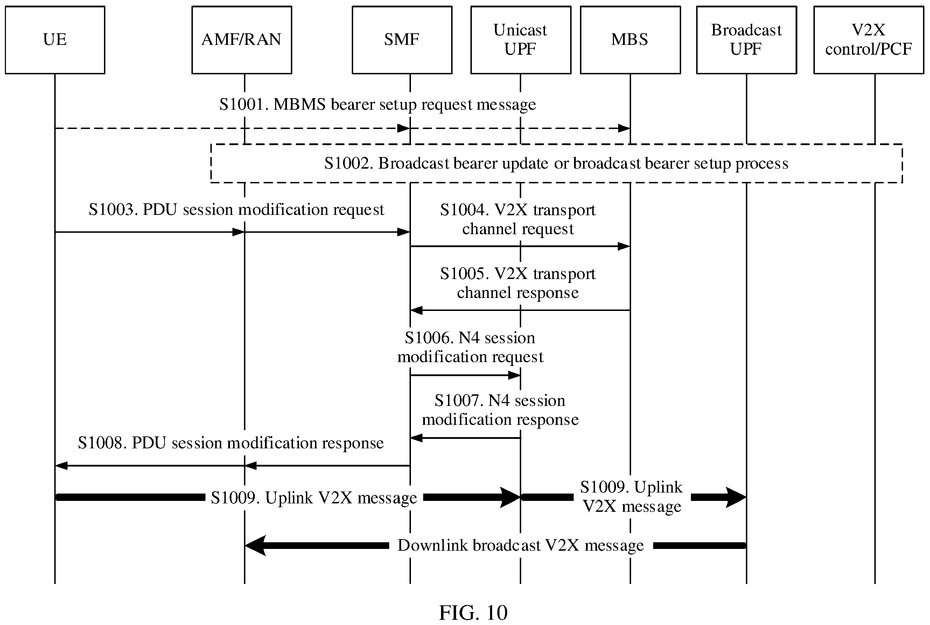

FIG 10 is a schematic flowchart of a data transmission method according to this application.

In the method 1000, UE is merely an example of a terminal that communicates with an AMF or a RAN, and the terminal that communicates with the AMF or the RAN may alternatively be a vehicle-mounted communications device. The method 1000 includes the following steps.

S1001. The UE determines, based on a current V2X service feature (for example, a type of a V2X message or a type of a V2X application), to change a transmission range. The UE sends an MBMS bearer setup request message to an SMF, where the message includes communications area information. The communications area information is used to indicate a communications range, and may also be referred to as broadcast area description information. The communications area information may be information such as a service area identity (service area identity, SAI), an E-UTRAN cell global identifier (E-UTRAN cell global identifier, ECGI) or a cell identity list (cell ID list), a registration area (registration area, RA), a tracing area (tracing area, TA), a local network service area (local area data network service area), or a geographical area (for example, longitude and latitude information), or may be a circular area that uses a current location of the UE as a center and that has a specified radius. The SMF sends the message to a broadcast session network element (an MBS shown in FIG. 10). If there is an available broadcast bearer (which may also be referred to as a broadcast flow) on a UE side, the MBMS bearer setup request message may further carry an MBS session identifier (MBS session ID) or a broadcast bearer identifier (which may also be referred to as a broadcast flow identifier). Optionally, the MBMS bearer setup request message may further carry MBS information (for example, an identifier, an address, and a name of the MBS), which is used by the SMF to contact the MBS.

S1002. A network side performs a broadcast bearer update or broadcast bearer setup process. For example, if the request message in S1001 carries the MBS session identifier, the broadcast bearer identifier, or the MBS information, the SMF forwards the request to an MBS corresponding to the MBS session identifier, the broadcast bearer identifier, or the MBS information. If the request message in S1001 does not include the MBS session identifier, the broadcast bearer identifier, or the MBS information, the SMF selects an MBS according to a preset rule, and forwards the request message to the selected MBS. After receiving the request, the MBS determines, based on the communications area information and the MBS session identifier or the broadcast bearer identifier or the MBS information, to set up a new broadcast bearer or update a broadcast bearer, and sends the set up new broadcast bearer or the updated broadcast bearer to the UE.

The SMF may select an MBS according to the following preset rule: selecting, based on a UE location, an MBS that is relatively close to a current location of the UE, selecting, based on MBS load, an MBS having lightest load; or selecting, based on the communications area information, an MBS located in a communications area and close to a central location. If the MBMS bearer setup request message in S1001 does not include the communications area information, the SMF may select an MBS according to the first two preset rules.

S1003. If the UE determines, based on a current V2X service feature (for example, a type of a V2X message or a type of a V2X application), to use an uplink-to-broadcast downlink transmission manner, the UE sends a PDU session modification request (PDU session modification request) to the SMF, where the PDU session modification request is a first request message, and the V2X transport channel request includes unicast flow information, and may further include at least one of broadcast flow information and UPF local broadcast breakout indication information. The broadcast flow information is, for example, the MBS session identifier (MBS Session ID) and/or the MBS bearer identifier (MBS Bearer ID). The unicast flow information may include at least one of an uplink session identifier, a flow identifier, and a unicast UPF tunnel identifier. If the unicast flow information includes a flow identifier (flow ID), the unicast flow information is used to indicate that a flow corresponding to the flow identifier needs to be switched to downlink broadcast transmission. If the unicast flow information includes only a session identifier (session ID), the unicast flow information is used to indicate that all flows in a session corresponding to the session identifier need to be switched to downlink broadcast transmission. If the unicast flow information includes a UPF tunnel identifier, the unicast flow information is used to indicate that data corresponding to the UPF tunnel identifier needs to be switched to downlink broadcast transmission. The UPF local broadcast breakout indication information is used to indicate to the SMF that uplink data of the UE does not need to be sent to a V2X server (namely, an AS), and the uplink data of the UE is directly forwarded to a corresponding downlink broadcast. In another optional implementation, the UPF local broadcast breakout indication information may be uses to indicate to send uplink data of the UE to a V2X server, and additionally copy the uplink data and forward the uplink data to a corresponding broadcast path for downlink transmission.

S1004. The SMF sends a V2X transport channel request (that is, a second request message) to the MBS, where the V2X transport channel request is used to establish an association relationship between a unicast flow and a broadcast flow, and request to obtain UPF information of a broadcast session. The V2X transport channel request may include the unicast flow information, and may further include at least one of the broadcast flow information, unicast flow information, and the UPF local broadcast breakout indication information.

S1005. The MBS establishes the association relationship between the unicast flow and the broadcast flow. During specific implementation, the MBS may map or bind the unicast flow information and the broadcast flow information. The MBS returns a V2X transport channel response (V2V transport channel response) to the SMF, where the V2X transport channel response is a response message for the second request message, and the V2X transport channel response includes broadcast UPF information (UPF (multicast) info). The broadcast UPF information is used to identify a broadcast UPF. The broadcast UPF is a UPF that performs a UPF local broadcast breakout, and may also be referred to as a second UPF. The broadcast UPF information may include at least one of the following information: a tunnel identifier of the broadcast UPF, an address of the broadcast UPF, and a broadcast user plane address and port number (used by a unicast UPF to encapsulate a data packet). The MBS obtains the broadcast UPF information in the broadcast session establishment/update process in S1002.

S1006. The SMF sends an N4 session modification request (N4 session modification request) to a unicast UPF (which may also be referred to as a first UPF), where the N4 session modification request is a third request message, and the N4 session modification request includes broadcast UPF information and unicast flow information, the N4 session modification request is used to request to perform a local breakout (Local Breakout) on the uplink data to switch to broadcast downlink, that is, request to perform a UPF local broadcast breakout. If the unicast flow information in S1003 is a flow identifier, the unicast flow information in S1006 is the flow identifier in S1003; if the unicast flow information in S1003 includes only the session identifier, the unicast flow information in S1006 may be identifiers of all flows corresponding to the session identifier, and in this case, the identifiers of all the flows corresponding to the session identifier may further be replaced with a core network (core network, CN) tunnel identifier corresponding to the session identifier.

After receiving the uplink-to-downlink connection request, if subsequently receiving uplink data corresponding to the UE, the unicast UPF forwards the data to the broadcast UPF. The uplink-to-downlink connection request may further include UPF local broadcast breakout indication information used to indicate to the SMF that the uplink data of the UE does not need to be sent to a V2X server (namely, an AS), but is directly forwarded to a corresponding downlink broadcast. In another optional implementation, the UPF local broadcast breakout indication information may be used to indicate to send uplink data of the UE to a V2X server, and additionally copy the uplink data and forward the uplink data to a corresponding broadcast path for downlink transmission. In this manner, the unicast UPF not only forwards the data to the broadcast UPF, but also sends the data to the V2X server.

S1007. The unicast UPF sends an N4 session modification response (N4 session modification response), namely, a response message for the third request message, to the SMF, where the N4 session modification response is used to confirm that the unicast UPF accepts the request of the third request message.

S1008. The SMF sends a PDU session modification response (PDU session modification response) to the UE, where the PDU session modification response is a response message for the first request message, and is used to confirm that the first request message is successfully processed.

S1009. The UE sends an uplink V2X message to the unicast UPF, and the unicast UPF encapsulates or forwards a data packet, and sends the uplink V2X message to the broadcast UPF. The broadcast UPF sends the V2X message to another UE by using the broadcast bearer. The encapsulation refers to that the unicast UPF sends the uplink V2X message to the broadcast UPF by using the broadcast user plane address and port number. The forwarding refers that the unicast UPF sends the uplink V2X message to the broadcast UPF, and the broadcast UPF encapsulates the uplink V2X message.

It should be noted that, if the SMF and the MBS are disposed in a combined manner, signaling exchange between the SMF and the MBS is implemented internally and may be omitted. If the unicast UPF and the broadcast UPF are disposed in a combined manner, S1009 is internally implemented. The foregoing steps may be performed at time intervals.

The following further describes a data transmission method provided in this application when an SMF and an MBS are disposed in a combined manner.

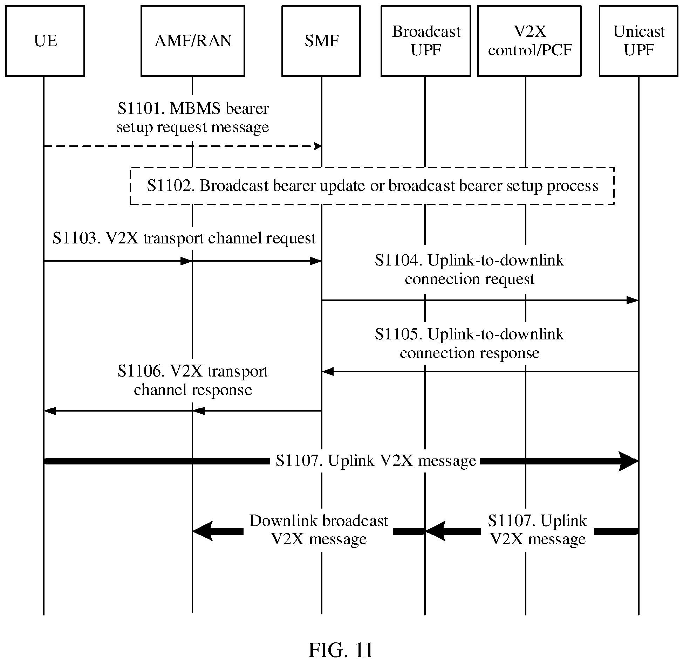

FIG 11 is a schematic flowchart of a data transmission method according to this application.

In the method 1100, UE is merely an example of a terminal that communicates with an AMF or a RAN, and the terminal that communicates with the AMF or the RAN may alternatively be a vehicle-mounted communications device. The method 1100 includes the following steps.

S1101. The UE determines, based on a current V2X service feature (for example, a type of a V2X message or a type of a V2X application), to change a transmission range. The UE sends an MBMS bearer setup request message to an SMF, where the message may include communications area information. The communications area information is used to indicate a communications range, and may also be referred to as broadcast area description information. The communications area information may be information such as a service area identity (service area identity, SAI), an E-UTRAN cell global identifier (E-UTRAN cell global identifier, ECGI) or a cell identity list (cell ID list), a registration area (registration area, RA), a tracing area (tracing area, TA), a local network service area (local area data network service area), or a geographical area (for example, longitude and latitude information), or may be a circular area that uses a current location of the UE as a center and that has a specified radius. The SMF sends the message to a broadcast session network element (an MBS (MBMS SMF) shown in FIG. 7). If there is an available broadcast bearer (which may also be referred to as a broadcast flow) on a UE side, the MBMS bearer setup request message may further carry an MBS session identifier (MBS session ID) or a broadcast bearer identifier (which may also be referred to as a broadcast flow identifier). Step 1101 is an optional step.

S1102. A network side performs a broadcast bearer update or broadcast bearer setup process. For example, if the request message in S1101 carries the MBS session identifier, the broadcast bearer identifier, or the communications area information, the SMF determines, based on the communications area information and the MBS session identifier or the broadcast bearer identifier, to set up a new broadcast bearer or update a broadcast bearer, and sends the set up new broadcast bearer or the updated broadcast bearer to the UE. This step is an optional step.

S1103. If the UE determines, based on a current V2X service feature (for example, a type of a V2X message or a type of a V2X application), to use an uplink-to-broadcast downlink transmission manner, the UE sends a first request message to the SMF, where the first request message may be a V2X transport channel request (V2V transport channel request) or a PDU session modification request (PDU session modification request), and the request includes unicast flow information, and may further include at least one of broadcast flow information and UPF local broadcast breakout indication information. The broadcast flow information is, for example, the MBS session identifier (MBS Session ID) and/or the MBS bearer identifier (MBS Bearer ID). The unicast flow information may include at least one of an uplink session identifier, a flow identifier, and a unicast UPF tunnel identifier. When the unicast flow information includes a flow identifier (flow ID), the unicast flow information is used to indicate that a flow corresponding to the flow identifier needs to be switched to downlink broadcast transmission. When the unicast flow information includes a session identifier (session ID), the unicast flow information is used to indicate that all flows in a session corresponding to the session identifier need to be switched to downlink broadcast transmission. When the unicast flow information includes a UPF tunnel identifier, the unicast flow information is used to indicate that data corresponding to the UPF tunnel identifier needs to be switched to downlink broadcast transmission. The UPF local broadcast breakout indication information is used to indicate to the SMF that uplink data of the UE does not need to be sent to a V2X server (namely, an AS), and the uplink data of the UE is directly forwarded to a corresponding downlink broadcast. In another optional implementation, the UPF local broadcast breakout indication information may be uses to indicate to send uplink data of the UE to a V2X server, and additionally copy the uplink data and forward the uplink data to a corresponding broadcast path for downlink transmission. The message may further include the communications area information. A description of the communications area information is the same as that in S1101. Step S1102 may alternatively be performed after step S1103.

S1104. The SMF sends a third request message to a unicast UPF (which may also be referred to as a first UPF), where the third request message may be an uplink-to-downlink connection request (UL-DL link request), and the request includes information about a UPF that performs a local broadcast breakout and unicast flow information, the request is used to request to perform a local breakout (Local breakout) on uplink unicast flow data to switch to broadcast downlink, that is, to request to perform a UPF local broadcast breakout on the unicast flow data. If the unicast flow information in S1103 is a flow identifier, the unicast flow information in S1104 is the flow identifier in S1103; if the unicast flow information in S1103 includes only the session identifier, the unicast flow information in S1104 may be identifiers of all flows corresponding to the session identifier, and in this case, the identifiers of all the flows corresponding to the session identifier may further be replaced with a core network (core network, CN) tunnel identifier corresponding to the session identifier.

After receiving the uplink-to-downlink connection request, if subsequently receiving uplink unicast flow data corresponding to the UE, the unicast UPF forwards the unicast flow data to the broadcast UPF. In another optional implementation, the uplink-to-downlink connection request may further include UPF local broadcast breakout indication information used to indicate to the SMF that the uplink data of the UE does not need to be sent to a V2X server (namely, an AS), but is directly forwarded to a corresponding downlink broadcast. In another optional implementation, the UPF local broadcast breakout indication information may be used to indicate to send uplink data of the UE to a V2X server, and additionally copy the uplink data and forward the uplink data to a corresponding downlink broadcast path for transmission. In this manner, the unicast UPF not only forwards the unicast flow data to the broadcast UPF, but also sends the data to the V2X server. A processing manner in which the unicast UPF sends the data to the broadcast UPF is the same as that described in the foregoing implementation.

S 1105. The unicast UPF sends a response for the third request message to the SMF, where the response message for the third request message may be an uplink-to-downlink connection response (UL-DL link response), that is, the uplink-to-downlink connection response is used to confirm that the unicast UPF accepts the request for the third request message.

S 1106. The SMF sends a response message for the first request message to the UE, where the response message for the first request message may be a V2X transport channel response (V2X transport channel response) or a PDU session modification response (PDU session modification response), and is used to confirm that the first request message is successfully processed.

S 1107. The UE sends an uplink V2X message to the unicast UPF, and the unicast UPF encapsulates or forwards a data packet, and sends the uplink V2X message to the broadcast UPF. The broadcast UPF sends the V2X message to another UE by using the broadcast bearer. The encapsulation refers to that the unicast UPF sends the uplink V2X message to the broadcast UPF by using the broadcast user plane address and port number. The forwarding refers that the unicast UPF sends the uplink V2X message to the broadcast UPF, and the broadcast UPF encapsulates the uplink V2X message.

It should be noted that if the unicast UPF and the broadcast UPF are disposed in a combined manner, S1107 is internally implemented. The foregoing steps may be performed at time intervals.

The foregoing describes in detail an example of the data transmission method provided in this application. It may be understood that, to implement the foregoing functions, each network element includes a corresponding hardware structure and/or software module for performing the functions. A person skilled in the art should easily be aware that, in combination with units and algorithm steps of the examples described in the implementations disclosed in this specification, this application may be implemented by hardware or a combination of hardware and computer software. Whether a function is performed by hardware or hardware driven by computer software depends on particular applications and design constraints of the technical solutions.

In this application, function unit division may be performed on the foregoing network elements based on the foregoing method examples. For example, each function unit may be obtained through division based on a corresponding function, or two or more functions may be integrated into one unit. The integrated unit may be implemented in a form of hardware, or may be implemented in a form of a software function unit. It should be noted that, unit division in this application is an example, and is merely logical function division. During actual implementation, another division manner may be used.

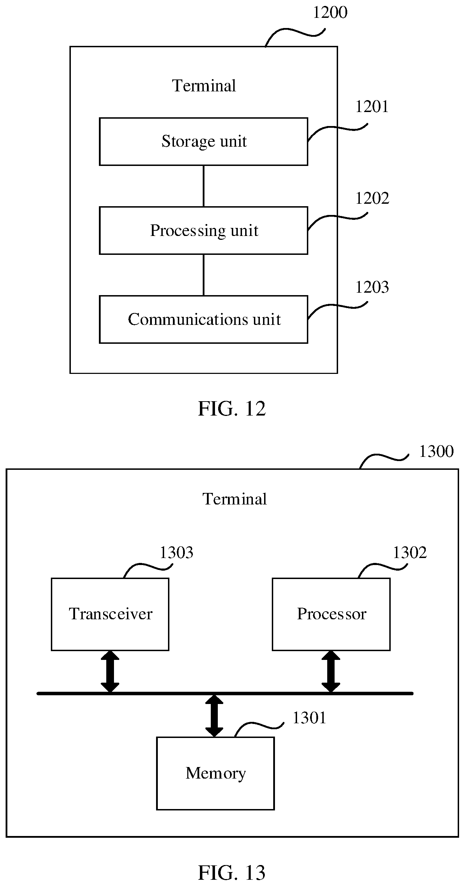

When an integrated unit is used, FIG. 12 is a possible schematic structural diagram of the terminal in the foregoing implementations. A terminal 1200 includes a processing unit 1202 and a communications unit 1203. The processing unit 1202 is configured to control and manage an action of the terminal 1200. For example, the processing unit 1202 is configured to support the terminal 1200 in performing each step in FIG. 2 and/or is used in another process of the technology described in this specification. The communications unit 1203 is configured to support the terminal 1200 in communicating with another network element, for example, communicating with a RAN. The terminal 1200 may further include a storage unit 1201, configured to store program code and data of the terminal 1200.

For example, the processing unit 1202 is configured to control the communications unit 1203 to perform the following steps:
sending a first request message to an SMF, where the first request message is used to request to perform a UPF local broadcast breakout on unicast flow data; and
receiving a response message for the first request message.

The processing unit 1202 may be a processor or a controller, for example, may be a central processing unit (central processing unit, CPU), a general purpose processor, a digital signal processor (digital signal processing, DSP), an application-specific integrated circuit (application-specific integrated circuit, ASIC), a field programmable gate array (field programmable gate array, FPGA), or another programmable logical device, a transistor logical device, a hardware component, or any combination thereof. The processor may implement or execute various example logical blocks, modules, and circuits described with reference to content disclosed in this application. The processor may alternatively be a combination implementing a computing function, for example, a combination of one or more microprocessors, or a combination of a DSP and a microprocessor. The communications unit 1203 may be a transceiver, a transceiver circuit, or the like. The storage unit 1201 may be a memory.

When the processing unit 1202 is a processor, the communications unit 1203 is a transceiver, and the storage unit 1201 is a memory, the terminal in this application may be a terminal shown in FIG. 13.

Referring to FIG. 13, the terminal 1300 includes a processor 1302, a transceiver 1303, and a memory 1301. The transceiver 1303, the processor 1302, and the memory 1301 may communicate with each other by using an internal connection path, to transfer a control signal and/or a data signal.

It may be clearly understood by a person skilled in the art that, for the purpose of convenient and brief description, for a detailed working process of the foregoing apparatus and unit, refer to a corresponding process in the foregoing method implementations, and details are not described herein again.

The terminal 1200 and the terminal 1300 that are provided in this application can reduce a transmission delay of unicast flow data that needs to be broadcast in a small range.

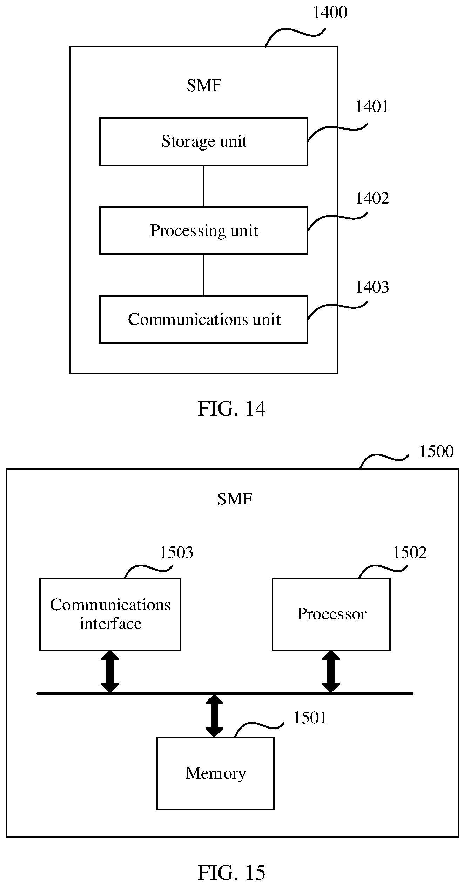

When an integrated unit is used, FIG. 14 is a possible schematic structural diagram of the SMF in the foregoing implementations. An SMF 1400 includes a processing unit 1402 and a communications unit 1403. The processing unit 1402 is configured to control and manage an action of the SMF 1400. For example, the processing unit 1402 is configured to support the SMF 1400 in performing each step in FIG. 3 through the communications unit 1403 and/or is used in another process of the technology described in this specification. The communications unit 1403 is configured to support the SMF 1400 in communicating with another network entity, for example, communicating with a first UPF. The SMF 1400 may further include a storage unit 1401, configured to store program code and data of the SMF 1400.

For example, the processing unit 1402 is configured to control the communications unit 1403 to perform the following steps:
receiving a first request message from a terminal, where the first request message is used to request to perform a UPF local broadcast breakout on unicast flow data; and
sending a response message for the first request message to the terminal.

The processing unit 1402 may be a processor or a controller, for example, may be a CPU, a general purpose processor, a DSP, an ASIC, an FPGA or another programmable logic device, a transistor logic device, a hardware component, or any combination thereof. The processor may implement or execute various example logical blocks, modules, and circuits described with reference to content disclosed in this application. The processor may alternatively be a combination implementing a computing function, for example, a combination of one or more microprocessors, or a combination of a DSP and a microprocessor. The communications unit 1403 may be a communications interface, a transceiver circuit, or the like. The storage unit 1401 may be a memory.

When the processing unit 1402 is a processor, the communications unit 1403 is a communications interface, and the storage unit 1401 is a memory, the SMF in this application may be an SMF shown in FIG. 15.

Referring to FIG. 15, the SMF 1500 includes a processor 1502, a communications interface 1503, and a memory 1501. The communications interface 1503, the processor 1502, and the memory 1501 may communicate with each other by using an internal connection path, to transfer a control signal and/or a data signal.

It may be clearly understood by a person skilled in the art that, for the purpose of convenient and brief description, for a detailed working process of the foregoing apparatus and unit, refer to a corresponding process in the foregoing method implementations, and details are not described herein again.

The SMF 1400 and the SMF 1500 that are provided in this application for data transmission can reduce a transmission delay of unicast flow data that needs to be broadcast in a small range.

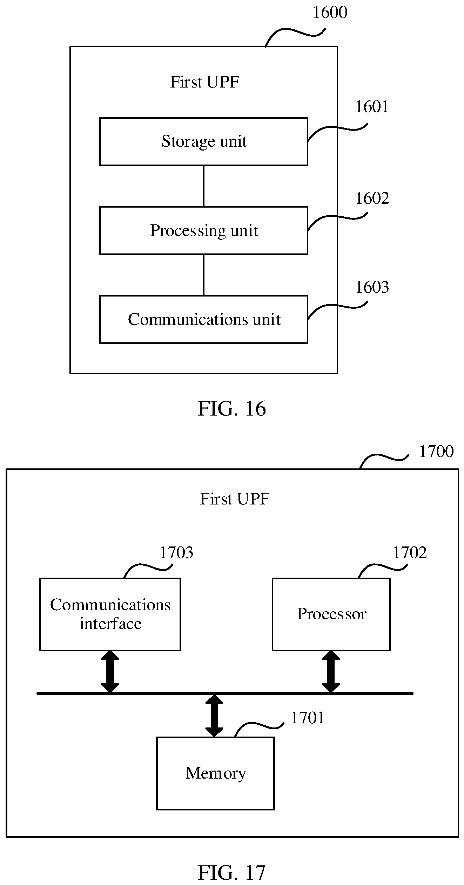

When an integrated unit is used, FIG. 16 is a possible schematic structural diagram of the first UPF in the foregoing implementations. A first UPF 1600 includes a processing unit 1602 and a communications unit 1603. The processing unit 1602 is configured to control and manage an action of the first UPF 1600. For example, the processing unit 1602 is configured to support the first UPF 1600 in performing each step in FIG. 4 through the communications unit 1603 and/or is used in another process of the technology described in this specification. The communications unit 1603 is configured to support the first UPF 1600 in communicating with another network entity, for example, communicating with an SMF. The first UPF 1600 may further include a storage unit 1601, configured to store program code and data of the first UPF 1600.

For example, the processing unit 1602 is configured to control the communications unit 1603 to perform the following steps:
receiving a third request message from the SMF, where the third request message is used to request to perform a UPF local broadcast breakout on unicast flow data; and
sending a response message for the third request message to the SMF

The processing unit 1602 may be a processor or a controller, for example, may be a CPU, a general purpose processor, a DSP, an ASIC, an FPGA, or another programmable logic device, a transistor logic device, a hardware component, or any combination thereof. The processor may implement or execute various example logical blocks, modules, and circuits described with reference to content disclosed in this application. The processor may alternatively be a combination implementing a computing function, for example, a combination of one or more microprocessors, or a combination of a DSP and a microprocessor. The communications unit 1603 may be a communications interface, a transceiver circuit, or the like. The storage unit 1601 may be a memory.

When the processing unit 1602 is a processor, the communications unit 1603 is a communications interface, and the storage unit 1601 is a memory, the first UPF in this application may be a first UPF shown in FIG. 17.

Referring to FIG. 17, the first UPF 1700 includes a processor 1702, a communications interface 1703, and a memory 1701. The communications interface 1703, the processor 1702, and the memory 1701 may communicate with each other by using an internal connection path, to transfer a control signal and/or a data signal.

It may be clearly understood by a person skilled in the art that, for the purpose of convenient and brief description, for a detailed working process of the foregoing apparatus and unit, refer to a corresponding process in the foregoing method implementations, and details are not described herein again.

The first UPF 1600 and the first UPF 1700 that are provided in this application for data transmission can reduce a transmission delay of unicast flow data that needs to be broadcast in a small range.

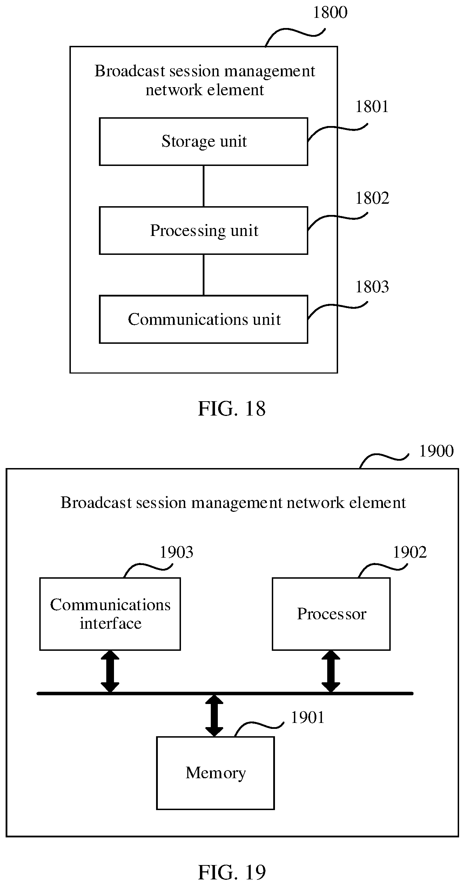

When an integrated unit is used, FIG. 18 is a possible schematic structural diagram of the broadcast session management network element in the foregoing implementations. A broadcast session management network element 1800 includes a processing unit 1802 and a communications unit 1803. The processing unit 1802 is configured to control and manage an action of the broadcast session management network element 1800. For example, the processing unit 1802 is configured to support the broadcast session management network element 1800 in performing each step in FIG. 5 through the communications unit 1803 and/or is used in another process of the technology described in this specification. The communications unit 1803 is configured to support the broadcast session management network element 1800 in communicating with another network entity, for example, communicating with an SMF. The broadcast session management network element 1800 may further include a storage unit 1801, configured to store program code and data of the broadcast session management network element 1800.

For example, the processing unit 1802 is configured to control the communications unit 1803 to perform the following steps:
receiving a second request message from the SMF, where the second request message is used to obtain information about a UPF that performs a UPF local broadcast breakout; and
sending a response message for the second request message to the SMF, where the response message for the second request message includes the information for identifying the UPF that performs the UPF local broadcast breakout.

The processing unit 1802 may be a processor or a controller, for example, may be a CPU, a general purpose processor, a DSP, an ASIC, an FPGA or another programmable logic device, a transistor logic device, a hardware component, or any combination thereof. The processor may implement or execute various example logical blocks, modules, and circuits described with reference to content disclosed in this application. The processor may alternatively be a combination implementing a computing function, for example, a combination of one or more microprocessors, or a combination of a DSP and a microprocessor. The communications unit 1803 may be a communications interface, a transceiver circuit, or the like. The storage unit 1801 may be a memory.

When the processing unit 1802 is a processor, the communications unit 1803 is a communications interface, and the storage unit 1801 is a memory, the broadcast session management network element in this application may be a broadcast session management network element shown in FIG. 19.

Referring to FIG. 19, the broadcast session management network element 1900 includes a processor 1902, a communications interface 1903, and a memory 1901. The communications interface 1903, the processor 1902, and the memory 1901 may communicate with each other by using an internal connection path, to transfer a control signal and/or a data signal.

It may be clearly understood by a person skilled in the art that, for the purpose of convenient and brief description, for a detailed working process of the foregoing apparatus and unit, refer to a corresponding process in the foregoing method implementations, and details are not described herein again.

The broadcast session management network element 1800 and the broadcast session management network element 1900 that are provided in this application for data transmission can reduce a transmission delay of unicast flow data that needs to be broadcast in a small range.

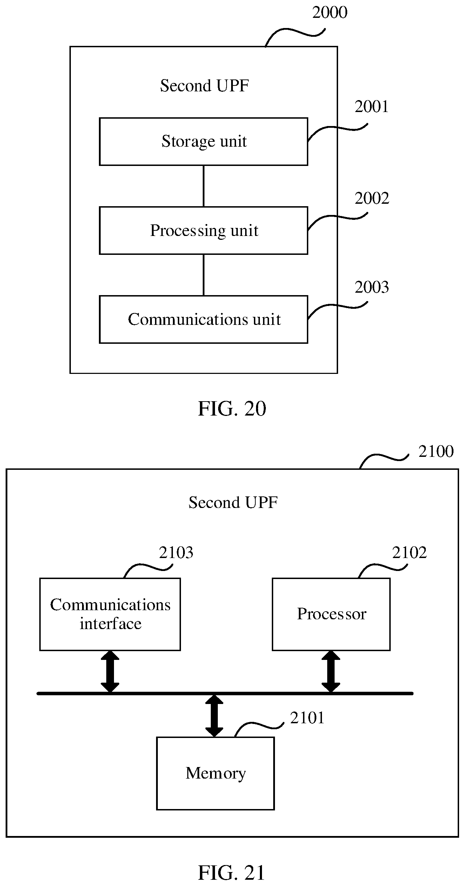

When an integrated unit is used, FIG. 20 is a possible schematic structural diagram of the second UPF in the foregoing implementations. A second UPF 2000 includes a processing unit 2002 and a communications unit 2003. The processing unit 2002 is configured to control and manage an action of the second UPF 2000. For example, the processing unit 2002 is configured to support the second UPF 2000 in performing each step in FIG. 6 through the communications unit 2003 and/or is used in another process of the technology described in this specification. The communications unit 2003 is configured to support the second UPF 2000 in communicating with another network entity, for example, communicating with a first UPF. The second UPF 2000 may further include a storage unit 2001, configured to store program code and data of the second UPF 2000.

For example, the processing unit 2002 is configured to control the communications unit 2003 to perform the following steps:
receiving unicast flow data from the first UPF, where the second UPF is a UPF that performs a UPF local broadcast breakout; and
broadcasting the data corresponding to a unicast flow through a broadcast session corresponding to the UPF local broadcast breakout.

The processing unit 2002 may be a processor or a controller, for example, may be a CPU, a general purpose processor, a DSP, an ASIC, an FPGA, or another programmable logic device, a transistor logic device, a hardware component, or any combination thereof. The processor may implement or execute various example logical blocks, modules, and circuits described with reference to content disclosed in this application. The processor may alternatively be a combination implementing a computing function, for example, a combination of one or more microprocessors, or a combination of a DSP and a microprocessor. The communications unit 2003 may be a communications interface, a transceiver circuit, or the like. The storage unit 2001 may be a memory.

When the processing unit 2002 is a processor, the communications unit 2003 is a communications interface, and the storage unit 2001 is a memory, the second UPF in this application may be a second UPF shown in FIG. 21.

Referring to FIG. 21, the second UPF 2100 includes a processor 2102, a communications interface 2103, and a memory 2101. The communications interface 2103, the processor 2102, and the memory 2101 may communicate with each other by using an internal connection path, to transfer a control signal and/or a data signal.

It may be clearly understood by a person skilled in the art that, for the purpose of convenient and brief description, for a detailed working process of the foregoing apparatus and unit, refer to a corresponding process in the foregoing method implementations, and details are not described herein again.

The second UPF 2000 and the second UPF 2100 that are provided in this application for data transmission can reduce a transmission delay of unicast flow data that needs to be broadcast in a small range.

Sequence numbers of the foregoing processes do not mean execution sequences in various implementations of this application. The execution sequences of the processes should be determined based on functions and internal logic of the processes, and should not be construed as any limitation on the implementation processes of this application.

In addition, the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated obj ects.

Method or algorithm steps described in combination with content disclosed in this application may be implemented by hardware, or may be implemented by a processor by executing a software instruction. The software instruction may include a corresponding software module. The software module may be stored in a random access memory (random access memory, RAM), a flash memory, a read-only memory (read only memory, ROM), an erasable programmable read-only memory (erasable programmable ROM, EPROM), an electrically erasable programmable read-only memory (electrically EPROM, EEPROM), a register, a hard disk, a mobile hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor. The processor and the storage medium may be located in an ASIC. In addition, the ASIC may be located in a terminal device or a core network element. Certainly, the processor and the storage medium may alternatively exist in the terminal device or the core network element as discrete components.

All or some of the foregoing implementations may be implemented by using software, hardware, firmware, or any combination thereof. When software is used to implement the implementations, the implementations may be implemented completely or partially in a form of a computer program product. The computer program product includes one or more computer instructions. When the computer instructions are loaded and executed on a computer, the procedures or functions according to this application are all or partially generated. The computer may be a general-purpose computer, a dedicated computer, a computer network, or another programmable apparatus. The computer instructions may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD), a semiconductor medium (for example, a solid-state drive (solid state disk, SSD)), or the like.

The scope of protection shall be defined by the appended claims.

## Claims

1. A data transmission method, comprising:
sending (S210), by a terminal, a first request message to a session management function, SMF, wherein the first request message is used to request to perform a user plane function, UPF, local broadcast breakout on unicast flow data; and
receiving (S220), by the terminal, a response message for the first request message;
wherein the response message is used to indicate that the first request message is already accepted.

2. The method according to claim 1, wherein the first request message comprises unicast flow information, and the unicast flow information is used to identify the unicast flow data.

3. The method according to claim 2, wherein the first request message further comprises at least one of broadcast flow information, communications area information, and local broadcast breakout indication information, wherein
the broadcast flow information is used to indicate a transmission path for the UPF local broadcast breakout, the communications area information is used to indicate a communications area for the UPF local broadcast breakout, and the local broadcast breakout indication information is used to indicate to perform the UPF local broadcast breakout on the unicast flow data.

4. A data transmission method, **characterized by** comprising:
receiving (S310), by a session management function, SMF, a first request message from a terminal, wherein the first request message is used to request to perform a user plane function, UPF, local broadcast breakout on unicast flow data; and
sending (S320), by the SMF, a response message for the first request message to the terminal;
wherein the response message is used to indicate that the first request message is already accepted.

5. The method according to claim 4, wherein the first request message comprises unicast flow information, and the unicast flow information is used to identify the unicast flow data.

6. The method according to claim 4 or 5, wherein the method further comprises:
sending, by the SMF, a second request message to a broadcast session management network element based on the first request message, wherein the second request message is used to obtain information about a UPF that performs the UPF local broadcast breakout; and
receiving, by the SMF, a response message for the second request message, wherein the response message for the second request message comprises the information about the UPF that performs the UPF local broadcast breakout.

7. The method according to claim 6, wherein the method further comprises:
receiving (S510), by the broadcast session management network element, the second request message from the SMF; and
sending (S520), by the broadcast session management network element, the response message for the second request message to the SMF.

8. The method according to claim 6 or 7, wherein the second request message comprises unicast flow information, and the unicast flow information is used to identify unicast flow data.

9. The method according to any one of claims 4 to 8, wherein the method further comprises:
sending, by the SMF, a third request message to a first UPF, wherein the third request message is used to request to perform a UPF local broadcast breakout on the unicast flow data; and
receiving, by the SMF, a response message that is for the third request message and that is from the first UPF.

10. The method according to claim 9, wherein the method further comprises:
receiving (S410), by the first UPF, the third request message from the SMF; and
sending (S420), by the first UPF, the response message for the third request message to the SMF.

11. The method according to claim 9 or 10, wherein the third request message comprises information about a UPF that performs the UPF local broadcast breakout and unicast flow information, and the unicast flow information is used to identify the unicast flow data.

12. The method according to claim 11, wherein the method further comprises:
receiving, by the first UPF, the unicast flow data; and
sending, by the first UPF, the unicast flow data to a second UPF based on the information about the UPF that performs the UPF local broadcast breakout, wherein the second UPF is the UPF that performs the UPF local broadcast breakout.

13. A data transmission apparatus comprising:
a memory storing a program instruction;
a processor coupled with the memory storing a set of instructions which when executed by the processor cause the apparatus to perform the steps performed by a terminal according to any one of claims 1 to 3 or the steps performed by any one of a session management function, SMF, a broadcast session management network element and a user plane function, UPF, according to any one of claims 4 to 12.

## Patentansprüche

1. Datenübertragungsverfahren, das Folgendes umfasst:
Senden (S210) einer ersten Anforderungsnachricht durch ein Endgerät an eine Sitzungsverwaltungsfunktion, SMF, wobei die erste Anforderungsnachricht verwendet wird, um das Durchführen eines lokalen Benutzerebenenfunktions(UPF)-Broadcastausbruchs an Unicastflussdaten anzufordern; und
Empfangen (S220) einer Antwortnachricht für die erste Anforderungsnachricht durch das Endgerät;
wobei die Antwortnachricht verwendet wird, um anzuzeigen, dass die erste Anforderungsnachricht bereits akzeptiert ist.

2. Verfahren nach Anspruch 1, wobei die erste Anforderungsnachricht Unicastflussinformationen umfasst und die Unicastflussinformationen verwendet werden, um die Unicastflussdaten zu identifizieren.

3. Verfahren nach Anspruch 2, wobei die erste Anforderungsnachricht ferner mindestens eines von Broadcastflussinformationen,
Kommunikationsgebietsinformationen und lokalen Broadcastausbruchsanzeigeinformationen umfasst, wobei die Broadcastflussinformationen verwendet werden, um einen Übertragungspfad für den lokalen UPF-Broadcastausbruch anzuzeigen, die Kommunikationsgebietsinformationen verwendet werden, um ein Kommunikationsgebiet für den lokalen UPF-Broadcastausbruch anzuzeigen, und die lokalen Broadcastausbruchsanzeigeinformationen verwendet werden, um das Durchführen des lokalen UPF-Broadcastausbruchs an den Unicastflussdaten anzuzeigen.

4. Datenübertragungsverfahren, **dadurch gekennzeichnet, dass** es Folgendes umfasst:
Empfangen (S310) einer ersten Anforderungsnachricht durch eine Sitzungsverwaltungsfunktion, SMF, von einem Endgerät, wobei die erste Anforderungsnachricht verwendet wird, um das Durchführen eines lokalen Benutzerebenenfunktions(UPF)-Broadcastausbruchs an Unicastflussdaten anzufordern; und
Senden (S320) einer Antwortnachricht für die erste Anforderungsnachricht durch die SMF an das Endgerät;
wobei die Antwortnachricht verwendet wird, um anzuzeigen, dass die erste Anforderungsnachricht bereits akzeptiert ist.

5. Verfahren nach Anspruch 4, wobei die erste Anforderungsnachricht Unicastflussinformationen umfasst und die Unicastflussinformationen verwendet werden, um die Unicastflussdaten zu identifizieren.

6. Verfahren nach Anspruch 4 oder 5, wobei das Verfahren ferner Folgendes umfasst:
Senden einer zweiten Anforderungsnachricht durch die SMF auf Basis der ersten Anforderungsnachricht an ein Broadcastsitzungsverwaltungsnetzwerkelement, wobei die zweite Anforderungsnachricht verwendet wird, um Informationen über eine UPF zu erhalten, die den lokalen UPF-Broadcastausbruch durchführt; und
Empfangen einer Antwortnachricht für die zweite Anforderungsnachricht durch die SMF, wobei die Antwortnachricht für die zweite Anforderungsnachricht die Informationen über die UPF umfasst, die den lokalen UPF-Broadcastausbruch durchführt.

7. Verfahren nach Anspruch 6, wobei das Verfahren ferner Folgendes umfasst:
Empfangen (S510) der zweiten Anforderungsnachricht durch das Broadcastsitzungsverwaltungsnetzwerkelement von der SMF; und
Senden (S520) der Antwortnachricht für die zweite Anforderungsnachricht durch das Broadcastsitzungsverwaltungsnetzwerkelement an die SMF.

8. Verfahren nach Anspruch 6 oder 7, wobei die zweite Anforderungsnachricht Unicastflussinformationen umfasst und die Unicastflussinformationen verwendet werden, um Unicastflussdaten zu identifizieren.

9. Verfahren nach einem der Ansprüche 4 bis 8, wobei das Verfahren ferner Folgendes umfasst:
Senden einer dritten Anforderungsnachricht durch die SMF an eine erste UPF, wobei die dritte Anforderungsnachricht verwendet wird, um das Durchführen eines lokalen UPF-Broadcastausbruchs an den Unicastflussdaten anzufordern; und
Empfangen einer Antwortnachricht durch die SMF, die für die dritte Anforderungsnachricht ist und von der ersten UPF kommt.

10. Verfahren nach Anspruch 9, wobei das Verfahren ferner Folgendes umfasst:
Empfangen (S410) der dritten Anforderungsnachricht durch die erste UPF von der SMF; und
Senden (S420) der Antwortnachricht für die dritte Anforderungsnachricht durch die erste UPF an die SMF.

11. Verfahren nach Anspruch 9 oder 10, wobei die dritte Anforderungsnachricht Informationen über eine UPF, die den lokalen UPF-Broadcastausbruch durchführt, sowie Unicastflussinformationen umfasst und die Unicastflussinformationen verwendet werden, um die Unicastflussdaten zu identifizieren.

12. Verfahren nach Anspruch 11, wobei das Verfahren ferner Folgendes umfasst:
Empfangen der Unicastflussdaten durch die erste UPF; und
Senden der Unicastflussdaten durch die erste UPF auf Basis der Informationen über die UPF, die den lokalen UPF-Broadcastausbruch durchführt, an eine zweite UPF, wobei die zweite UPF die UPF ist, die den lokalen UPF-Broadcastausbruch durchführt.

13. Datenübertragungsvorrichtung, die Folgendes umfasst:
einen Speicher, in dem eine Programmanweisung gespeichert ist;
einen Prozessor, der an den Speicher gekoppelt ist, in dem ein Satz von Anweisungen gespeichert ist, die, wenn sie vom Prozessor ausgeführt werden, die Vorrichtung veranlassen, die Schritte durchzuführen, die von einem Endgerät nach einem der Ansprüche 1 bis 3 durchgeführt werden, oder die Schritte, die von einem einer Sitzungsverwaltungsfunktion, SMF, einem Broadcastsitzungsverwaltungsnetzwerkelement und einer Benutzerebenenfunktion, UPF, nach einem der Ansprüche 4 bis 12 durchgeführt werden.

## Revendications

1. Procédé de transmission de données, comprenant :
l'envoi (S210), par un terminal, d'un premier message de demande à une fonction de gestion de session, SMF, dans lequel le premier message de demande est utilisé pour demander d'exécuter une interruption de diffusion locale de fonction de plan utilisateur, UPF, sur des données de flux unicast ; et
la réception (S220), par le terminal, d'un message de réponse pour le premier message de demande ;
dans lequel le message de réponse est utilisé pour indiquer que le premier message de demande est déjà accepté.

2. Procédé selon la revendication 1, dans lequel le premier message de demande comprend des informations de flux unicast, et les informations de flux unicast sont utilisées pour identifier les données de flux unicast.

3. Procédé selon la revendication 2, dans lequel le premier message de demande comprend en outre au moins l'une parmi des informations de flux de diffusion, des informations de zone de communication et des informations d'indication d'interruption de diffusion locale, dans lequel
les informations de flux de diffusion sont utilisées pour indiquer un chemin de transmission pour l'interruption de diffusion locale d'UPF, les informations de zone de communication sont utilisées pour indiquer une zone de communication pour l'interruption de diffusion locale d'UPF, et les informations d'indication d'interruption de diffusion locale sont utilisées pour indiquer d'exécuter l'interruption de diffusion locale d'UPF sur les données de flux unicast.

4. Procédé de transmission de données, **caractérisé en ce qu'**il comprend :
la réception (S310), par une fonction de gestion de session, SMF, d'un premier message de demande d'un terminal, dans lequel le premier message de demande est utilisé pour demander d'exécuter une interruption de diffusion locale de fonction de plan utilisateur, UPF, sur des données de flux unicast ; et
l'envoi (S320), par la SMF, d'un message de réponse pour le premier message de demande au terminal ;
dans lequel le message de réponse est utilisé pour indiquer que le premier message de demande est déjà accepté.

5. Procédé selon la revendication 4, dans lequel le premier message de demande comprend des informations de flux unicast, et les informations de flux unicast sont utilisées pour identifier les données de flux unicast.

6. Procédé selon la revendication 4 ou 5, dans lequel le procédé comprend en outre :
l'envoi, par la SMF, d'un deuxième message de demande à un élément de réseau de gestion de session de diffusion sur la base du premier message de demande, dans lequel le deuxième message de demande est utilisé pour obtenir des informations sur une UPF qui exécute l'interruption de diffusion locale d'UPF ; et
la réception, par la SMF, d'un message de réponse pour le deuxième message de demande, dans lequel le message de réponse pour le deuxième message de demande comprend les informations concernant l'UPF qui exécute l'interruption de diffusion locale d'UPF.

7. Procédé selon la revendication 6, dans lequel le procédé comprend en outre :
la réception (S510), par l'élément de réseau de gestion de session de diffusion, du deuxième message de demande de la SMF ;
et
l'envoi (S520), par l'élément de réseau de gestion de session de diffusion, du message de réponse pour le deuxième message de demande à la SMF.

8. Procédé selon la revendication 6 ou 7, dans lequel le deuxième message de demande comprend des informations de flux unicast, et les informations de flux unicast sont utilisées pour identifier des données de flux unicast.

9. Procédé selon l'une quelconque des revendications 4 à 8, dans lequel le procédé comprend en outre :
l'envoi, par la SMF, d'un troisième message de demande à une première UPF, dans lequel le troisième message de demande est utilisé pour demander d'exécuter une interruption de diffusion locale UPF sur les données de flux unicast ; et
la réception, par la SMF, d'un message de réponse qui est destiné au troisième message de demande et qui provient de la première UPF.

10. Procédé selon la revendication 9, dans lequel le procédé comprend en outre :
la réception (S410), par la première UPF, du troisième message de demande de la SMF ; et
l'envoi (S420), par la première UPF, du message de réponse pour le troisième message de demande à la SMF.

11. Procédé selon la revendication 9 ou 10, dans lequel le troisième message de demande comprend des informations sur une UPF qui exécute l'interruption de diffusion locale d'UPF et des informations de flux unicast, et les informations de flux unicast sont utilisées pour identifier les données de flux unicast.

12. Procédé selon la revendication 11, dans lequel le procédé comprend en outre :
la réception, par la première UPF, des données de flux unicast ;
et
l'envoi, par la première UPF, des données de flux unicast à une seconde UPF sur la base des informations sur l'UPF qui exécute l'interruption de diffusion locale d'UPF, dans lequel la seconde UPF est l'UPF qui exécute l'interruption de diffusion locale d'UPF.

13. Appareil de transmission de données comprenant :
une mémoire stockant une instruction de programme ;
un processeur couplé à la mémoire stockant un ensemble d'instructions qui, lorsqu'elles sont exécutées par le processeur, amènent l'appareil à exécuter les étapes exécutées par un terminal selon l'une quelconque des revendications 1 à 3 ou les étapes exécutées par l'un quelconque parmi une fonction de gestion de session, SMF, un élément de réseau de gestion de session de diffusion et une fonction de plan utilisateur, UPF, selon l'une quelconque des revendications 4 à 12.
